(19) Europäisches Patentamt / European Patent Office / Office européen des brevets

(11) **EP 4 442 779 B1**

(12) # EUROPEAN PATENT SPECIFICATION

(45) Date of publication and mention of the grant of the patent:
**08.07.2026 Bulletin 2026/28**

(21) Application number: **22901579.7**

(22) Date of filing: **26.10.2022**

(51) International Patent Classification (IPC):
***C09D 183/04*** *(2006.01)* ***C09J 7/40*** *(2018.01)*
***C09J 7/38*** *(2018.01)* ***C08G 77/04*** *(2006.01)*
***C08G 77/20*** *(2006.01)* ***C08G 77/08*** *(2006.01)*

(52) Cooperative Patent Classification (CPC):
(C-Sets available)
**C09J 7/401; C08L 83/04;** C08G 77/12; C08G 77/20; C09J 2203/318; C09J 2433/005 (Cont.)

(86) International application number:
**PCT/KR2022/016430**

(87) International publication number:
**WO 2023/101220 (08.06.2023 Gazette 2023/23)**

(54) **CURABLE COMPOSITION, PROTECTIVE FILM, OPTICAL ELEMENT, AND LIQUID CRYSTAL DISPLAY DEVICE**

HÄRTBARE ZUSAMMENSETZUNG, SCHUTZFILM, OPTISCHES ELEMENT UND FLÜSSIGKRISTALLANZEIGEVORRICHTUNG

COMPOSITION DURCISSABLE, FILM PROTECTEUR, ÉLÉMENT OPTIQUE ET DISPOSITIF D'AFFICHAGE À CRISTAUX LIQUIDES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **02.12.2021 KR 20210170634**
**25.10.2022 KR 20220138592**

(43) Date of publication of application:
**09.10.2024 Bulletin 2024/41**

(73) Proprietor: **LG Chem, Ltd.**
**Yeongdeungpo-gu**
**Seoul 07336 (KR)**

(72) Inventors:
- **PARK, Jun Hyoung**
**Daejeon 34122 (KR)**
- **KIM, Hyun Cheol**
**Daejeon 34122 (KR)**
- **KIM, Woo Yeon**
**Daejeon 34122 (KR)**
- **HONG, Jae Sung**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-B1- 2 046 866**
**WO-A1-2018/178321**
**WO-A1-2020/150227**
**CN-A- 101 045 819**
**JP-A- 2009 263 552**
**KR-A- 20110 020 859**
**KR-A- 20150 054 875**
**US-A- 4 293 676**
**US-A- 5 194 489**
**US-A- 5 204 384**
**US-A1- 2010 267 885**
**US-A1- 2014 356 620**
**US-A1- 2015 252 236**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 442 779 B1

(52) Cooperative Patent Classification (CPC): (Cont.)

C-Sets
**C08L 83/04, C08L 83/00, C08K 5/56;**
C09J 2433/005, C09J 2483/005

## Description

[Technical Field]

The present application relates to a protective film, an optical element, and a liquid crystal display device.

[Background Art]

In the manufacturing process of optical materials, such as a polarizing plate and a retardation plate, which are materials constituting a liquid crystal display, a surface protection film for protecting the surface of the optical material is bonded. The surface protection film is used only in the process of manufacturing the optical material, which is peeled off and removed from the optical material at the time when the optical material is mounted on a liquid crystal display.
In general, the surface protection film has a shape that a pressure-sensitive adhesive layer is formed on one side of an optically transparent polyalkylene terephthalate resin film, and a release film is bonded on the pressure-sensitive adhesive layer to protect the pressure-sensitive adhesive layer. As an example of such a surface protection film, Patent Document 1 (Korean Laid-Open Patent Publication No. 10-2016-0143501) is known.
As described above, the release film was generally used as uses of a coating base material and the like, while protecting the pressure-sensitive adhesive layer.
Meanwhile, the pressure-sensitive adhesive layer of the surface protection film is generally made of an acrylic composition comprising an acrylic compound, which is formed by comprising a compound that generates a curing reaction by heat or energy rays in the acrylic composition, and curing the acrylic composition suitable through heat or energy ray irradiation depending on the conditions.

[Prior Art Documents]

(Patent Document 1) Korean Laid-Open Patent Publication No. 10-2016-0105354
US 5204384 A discloses a curable composition comprising an organopolysiloxane gum exhibiting a degree of polymerization of 5,000 and consisting of 99.8 mol% dimethylsiloxane units and 0.2 mol% methylvinylsiloxane units; and organohydrogen polysiloxane; platinum-containing hydrosilylation catalyst; and a redox catalyst.
US 2010/267885 A1 discloses a curable composition comprising a vinyl-organo polysiloxane, an organohydrogenpolysiloxane, a platinum-containing hydrosilylation catalyst, and a redox catalyst.
US 5194489 A discloses a curable composition comprising an organopolysiloxane with alkene groups and a redox catalyst.
US 4293676 A discloses a curable composition comprising an organopolysiloxane with mercapto groups and a redox catalyst.
EP 2046866 B1 discloses a curable composition comprising an organopolysiloxane with aldehyde groups; a redox catalyst; and (meth)acrylic ester monomer.
US 2015/252236 A1 discloses a curable composition comprising an organopolysiloxane with hydrosilyl groups and a redox catalyst.
US 2014/356620 A1 discloses a curable composition comprising an organopolysiloxane with hydrosilyl groups; a redox catalyst; and a platinum-based hydrosilylation catalyst.

[Disclosure]

[Technical Problem]

The present application is intended to provide protective film comprising a curable composition capable of forming a cured product having appropriate release peel force and residual bond ratio.
In addition, the present application is intended to provide a protective film comprising a curable composition that cures an acrylic composition forming a pressure-sensitive adhesive layer without a curing process by heat or energy rays.

[Technical Solution]

Among the physical properties mentioned in the present application, when the measurement temperature affects the physical property, the relevant physical property is a physical property measured at room temperature, unless otherwise specified. In addition, unless otherwise specified, the unit of temperature is Celsius (°C).
The term room temperature as used herein is a natural temperature without warming or cooling, which may mean, for example, any one temperature within the range of 10°C to 30°C, for example, a temperature of about 15°C or

more, about 18°C or more, about 20°C or more, about 23°C or more, about 27°C or less, or 25°C.

The term 'a to b' as used herein means 'within the range between a and b while including a and b'. For example, the fact that includes a to b parts by weight has the same meaning as included in the range of a to b parts by weight.

The term relative humidity as used herein is expressed as a percentage (%) of the ratio of the amount of water vapor contained in the current air of a unit volume to the saturated vapor pressure that the air of the unit volume can contain at the maximum, which can be expressed in RH%.

The terms weight average molecular weight ($M_w$) and number average molecular weight ($M_n$) as used herein may be measured using GPC (gel permeation chromatography), and specifically may be measured according to the following physical property measurement method. Also, the term polydispersity index (PDI) as used herein is a value ($M_w/M_n$) obtained by dividing the weight average molecular weight ($M_w$) by the number average molecular weight ($M_n$), which means distribution of molecular weights of a polymer. Specifically, the number average molecular weight ($M_n$) and the weight average molecular weight ($M_w$) may be measured by placing an analyte in a 20 mL vial, diluting it in a THF (tetrahydrofuran) solvent to a concentration of about 20 mg/mL, and then filtering the standard sample for calibration and the sample to be analyzed through a syringe filter (pore size: 0.2 μm). In addition, as the analysis program, Agilent technologies' ChemStation may be used, and the number average molecular weight ($M_n$) and weight average molecular weight ($M_w$) may be obtained by comparing the elution time of the sample with the calibration curve. Here, the polydispersity index (PDI) may be a value obtained by dividing the measured weight average molecular weight ($M_w$) by the number average molecular weight ($M_n$).

<GPC measurement conditions>

Instrument: Agilent technologies' 1200 series

Column: using Agilent technologies' TL Mix. A & B

Solvent: THF

Column temperature: 40°C

Sample concentration: 20 mg/mL, 10 μl injection

Using MP: 364000, 91450, 17970, 4910 and 1300 as standard samples

The term substitution as used herein means that a hydrogen atom bonded to a carbon atom of a compound is changed to another substituent, where the position to be substituted is not particularly limited as long as it is a position in which the hydrogen atom is substituted, that is, a position in which the substituent is substitutable, and when two or more substituents are substituted, the substituents may be the same as or different from each other.

The term substituent as used herein means an atom or atomic group that replaces one or more hydrogen atoms on the parent chain of a hydrocarbon. In addition, the substituent is described below, but is not limited thereto, and the substituent may be further substituted with the substituent described below or may not be substituted with any substituent, unless otherwise specified herein.

The term alkyl group or alkylene group as used herein may be a linear or branched alkyl group or alkylene group with 1 to 20 carbon atoms, or 1 to 16 carbon atoms, or 1 to 12 carbon atoms, or 1 to 8 carbon atoms, or 1 to 6 carbon atoms, or a cyclic alkyl group or alkylene group with 3 to 20 carbon atoms, or 3 to 16 carbon atoms, or 3 to 12 carbon atoms, or 3 to 8 carbon atoms, or 3 to 6 carbon atoms, unless otherwise described. Here, the cyclic alkyl group or alkylene group also includes an alkyl group or alkylene group having only a ring structure, and an alkyl group or alkylene group including a ring structure. For example, both a cyclohexyl group and a methyl cyclohexyl group correspond to the cyclic alkyl group. Also, for example, the alkyl group or alkylene group may be exemplified by, specifically, methyl(ene), ethyl(ene), n-propyl(ene), isopropyl(ene), n-butyl(ene), isobutyl(ene), tert-butyl(ene), sec-butyl(ene), 1-methyl-butyl(ene), 1-ethyl-butyl(ene), n-pentyl(ene), isopentyl(ene), neopentyl(ene), tert-pentyl(ene), n-hexyl(ene), 1-methylpentyl(ene), 2-methylpentyl(ene), 4-methyl-2-pentyl(ene), 3,3-dimethylbutyl(ene), 2-ethylbutyl(ene), n-heptyl(ene), 1-methylhexyl(ene), n-octyl(ene), tert-octyl(ene), 1-methylheptyl(ene), 2-ethylhexyl(ene), 2-propylpentyl(ene), n-nonyl(ene), 2,2-dimethylheptyl(ene), 1-ethylpropyl(ene), 1,1-dimethylpropyl(ene), isohexyl(ene), 2-methylpentyl(ene), 4-methylhexyl(ene), 5-methylhexyl(ene), and the like, but is not limited thereto. In addition, the cycloalkyl group or cycloalkylene group may be exemplified by, specifically, cyclopropyl(ene), cyclobutyl(ene), cyclopentyl(ene), 3-methylcyclopentyl(ene), 2,3-dimethylcyclopentyl(ene), cyclohexyl(ene), 3-methylcyclohexyl(ene), 4-methylcyclohexyl(ene), 2,3-dimethylcyclohexyl(ene), 3,4,5-trimethylcyclohexyl(ene), 4-tert-butylcyclohexyl(ene), cycloheptyl(ene), cyclooctyl(ene), and the like, but is not limited thereto.

The term alkenyl group or alkenylene group as used herein may be a linear or branched acyclic alkenyl group or alkenylene group with 2 to 20 carbon atoms, or 2 to 16 carbon atoms, or 2 to 12 carbon atoms, or 2 to 8 carbon atoms, or 2 to 6 carbon atoms; or a cyclic alkenyl group or alkenylene group with 3 to 20 carbon atoms, or 3 to 16 carbon atoms, or 3 to 12 carbon atoms, or 3 to 8 carbon atoms, or 3 to 6 carbon atoms, unless otherwise described. Here, when an alkenyl group or alkenylene group with a ring structure is included, it corresponds to a cyclic alkenyl group or alkenylene group. Also, for example, it may be exemplified by ethenyl(ene), n-propenyl(ene), isopropenyl(ene), n-butenyl(ene), isobutenyl(ene), tert-butenyl(ene), sec-butenyl(ene), 1-methyl-butenyl(ene), 1-ethyl-butenyl(ene), n-pentenyl(ene), isopentenyl(ene), neopentenyl(ene), tert-pentenyl(ene), n-hexenyl(ene), 1-methylpentenyl(ene), 2-methylpentenyl(ene), 4-methyl-2-pentenyl(ene), 3,3-dimethylbutenyl(ene), 2-ethylbutenyl(ene), n-heptenyl(ene), 1-methylhexenyl(ene), n-octenyl(ene), tert-octenyl(ene), 1-methylheptenyl(ene), 2-ethylhexenyl(ene), 2-propylpentenyl(ene), n-nonylenenyl(ene), 2,2-dimethylheptenyl(ene), 1-ethylpropenyl(ene), 1,1-dimethylpropenyl(ene), isohexenyl(ene), 2-methylpentenyl(ene), 4-methylhexenyl(ene), 5-methylhexenyl(ene), and the like, but is not limited thereto. In addition, the cycloalkenyl group or cycloalkenylene group may be exemplified by, specifically, cyclopropenyl(ene), cyclobutenyl(ene), cyclopentenyl(ene), 3-methylcyclopentenyl(ene), 2,3-dimethylcyclopentenyl(ene), cyclohexenyl(ene), 3-methylcyclohexenyl(ene), 4-methylcyclohexenyl(ene), 2,3-dimethylcyclohexenyl(ene), 3,4,5-trimethylcyclohexenyl(ene), 4-tert-butylcyclohexenyl(ene), cycloheptenyl(ene), cyclooctenyl(ene), and the like, but is not limited thereto.

The term alkynyl group or alkynylene group as used herein may be a linear or branched acyclic alkynyl group or alkynylene group with 2 to 20 carbon atoms, or 2 to 16 carbon atoms, or 2 to 12 carbon atoms, or 2 to 8 carbon atoms, or 2 to 6 carbon atoms, or may be a cyclic alkynyl group or alkynylene group with 3 to 20 carbon atoms, or 3 to 16 carbon atoms, or 3 to 12 carbon atoms, or 3 to 8 carbon atoms, or 3 to 6 carbon atoms, unless otherwise described. Here, when an alkynyl group or alkynylene group with a ring structure is included, it corresponds to a cyclic alkynyl group or alkynylene group. Also, for example, it may be exemplified by ethynyl(ene), n-propynyl(ene), isopropynyl(ene), n-butynyl(ene), isobutynyl(ene), tert-butynyl(ene), sec-butynyl(ene), 1-methyl-butynyl(ene), 1-ethyl-butynyl(ene), n-pentynyl(ene), isopentynyl(ene), neopentynyl(ene), tert-pentynyl(ene), n-hexynyl(ene), 1-methylpentynyl(ene), 2-methylpentynyl(ene), 4-methyl-2-pentynyl(ene), 3,3-dimethylbutynyl(ene), 2-ethylbutynyl(ene), n-heptynyl(ene), 1-methylhexynyl(ene), n-octynyl(ene), tert-octynyl(ene), 1-methylheptynyl(ene), 2-ethylhexynyl(ene), 2-propylpentynyl(ene), n-nonynyl(ene), 2,2-dimethylheptynyl(ene), 1-ethylpropynyl(ene), 1,1-dimethylpropynyl(ene), isohexynyl(ene), 2-methylpentynyl(ene), 4-methylhexynyl(ene), 5-methylhexynyl(ene), and the like, but is not limited thereto. In addition, the cycloalkynyl group or cycloalkynylene group may be exemplified by, specifically, cyclopropynyl(ene), cyclobutynyl(ene), cyclopentynyl(ene), 3-methylcyclopentynyl(ene), 2,3-dimethylcyclopentynyl(ene), cyclohexynyl(ene), 3-methylcyclohexynyl(ene), 4-methylcyclohexynyl(ene), 2,3-dimethylcyclohexynyl(ene), 3, 4,5-trimethylcyclohexynyl(ene), 4-tert-butylcyclohexynyl(ene), cycloheptynyl(ene), cyclooctynyl(ene), and the like, but is not limited thereto.

The alkyl group, alkylene group, alkenyl group, alkenylene group, alkynyl group and alkynylene group may also be optionally substituted with one or more substituents. In this case, the substituent may be one or more selected from the group consisting of halogen (chlorine (Cl), iodine (I), bromine (Br), fluorine (F)), an aryl group, a heteroaryl group, an epoxy group, an alkoxy group, a cyano group, a carboxyl group, an acryloyl group, a methacryloyl group, an acryloyloxy group, a methacryloyloxy group, a carbonyl group and a hydroxy group, but is not limited thereto.

The term aryl group as used herein means an aromatic ring in which one hydrogen is removed from an aromatic hydrocarbon ring, where the aromatic hydrocarbon ring may include a monocyclic or polycyclic ring. The aryl group does not have a particularly limited number of carbon atoms, but may be an aryl group with 6 to 30 carbon atoms, or 6 to 26 carbon atoms, or 6 to 22 carbon atoms, or 6 to 20 carbon atoms, or 6 to 18 carbon atoms, or 6 to 15 carbon atoms, unless otherwise described. In addition, the term arylene group as used herein means that the aryl group has two bonding positions, that is, a divalent group. The description of the aryl group as described above may be applied, except that these are each a divalent group. The aryl group may be exemplified by, for example, a phenyl group, a phenylethyl group, a phenylpropyl group, a benzyl group, a tolyl group, a xylyl group or a naphthyl group, and the like, but is not limited thereto.

The term heteroaryl group as used herein is an aromatic ring containing one or more heteroatoms other than carbon, which may contain, specifically, one or more heteroatoms selected from the group consisting of nitrogen (N), oxygen (O), sulfur (S), selenium (Se) and tellurium (Te). In this case, the atoms constituting the ring structure of the heteroaryl group may be referred to as ring atoms. In addition, the heteroaryl group may include a monocyclic or polycyclic ring. The heteroaryl group does not have a particularly limited number of carbon atoms, but may be a heteroaryl group with 2 to 30 carbon atoms, or 2 to 26 carbon atoms, or 2 to 22 carbon atoms, or 2 to 20 carbon atoms, or 2 to 18 carbon atoms, or 2 to 15 carbon atoms, unless otherwise described. In another example, the heteroaryl group does not have a particularly limited number of ring atoms, but may be a heteroaryl group with 5 to 30, 5 to 25, 5 to 20, 5 to 15, 5 to 10, or 5 to 8 ring atoms. The heteroaryl group may be exemplified by, for example, a thiophene group, a furan group, a pyrrole group, an imidazolyl group, a thiazolyl group, an oxazolyl group, an oxadiazolyl group, a triazolyl group, a pyridyl group, a bipyridyl group, a pyrimidyl group, a triazinyl group, an acridyl group, a pyridazinyl group, a pyrazinyl group, a quinolinyl group, a quinazolinyl

group, a quinoxalinyl group, a phthalazinyl group, a pyridopyrimidinyl group, a pyridopyrazinyl group, a pyrazinopyrazinyl group, an isoquinolinyl group, an indole group, a carbazolyl group, a benzoxazolyl group, a benzimidazolyl group, a benzothiazolyl group, a benzocarbazolyl group, a dibenzocarbazolyl group, a benzothiophene group, a dibenzothiophene group, a benzofuran group, a dibenzofuran group, a benzosilole group, a dibenzosilole group, a phenanthrolinyl group, an isoxazolyl group, a thiadiazolyl group, a phenothiazinyl group, a phenoxazine group and condensed structures thereof, and the like, but is not limited thereto.

In addition, the term heteroarylene group as used herein means that the heteroaryl group has two bonding positions, that is, a divalent group. The description of the heteroaryl group as described above may be applied, except that these are each a divalent group.

The aryl group or heteroaryl group may also be optionally substituted with one or more substituents. In this case, the substituent may be one or more selected from the group consisting of halogen (chlorine (Cl), iodine (I), bromine (Br), fluorine (F)), an aryl group, a heteroaryl group, an epoxy group, an alkoxy group, a cyano group, a carboxyl group, an acryloyl group, a methacryloyl group, an acryloyloxy group, a methacryloyloxy group, a carbonyl group, and a hydroxy group, but is not limited thereto.

The present invention provides a protective film according to claim 1, an optical element according to claim 9, and a liquid crystal display device according to claim 10. Further embodiments are disclosed in the dependent claims.

The curable composition used in the invention comprises a polyorganosiloxane component and a redox catalyst.

The term curable composition as used herein may comprise a component that can be converted into a resin through a curing reaction or a polymerization reaction, as well as a component generally known as a resin. In addition, the curable composition may have adhesion or pressure-sensitive adhesion performance by itself, and may have adhesion or pressure-sensitive adhesion performance through a reaction such as a curing reaction.

Also, the curable composition may be a solvent-type curable composition, a water-based curable composition, or a solventless curable composition.

In addition, the curable composition may be an active energy ray (e.g., ultraviolet ray) curing type, a moisture curing type, a thermosetting type or a room temperature curing type. When the curable composition is an active energy ray curing type, the curing of the curable composition is performed by irradiation with active energy rays such as ultraviolet rays; when it is a moisture curing type, the curing of the curable composition is performed by a method of maintaining it under appropriate moisture; when it is a thermosetting type, the curing of the curable composition is performed by a method of applying an appropriate heat; or when it is a room temperature curing type, the curing of the curable composition is performed by a method of maintaining the curable composition at room temperature.

The curable composition cures an acrylic composition. In addition, the curable composition forms a cured product by curing the acrylic composition without heat or energy ray irradiation.

The term acrylic composition as used herein may mean a composition comprising an acrylic compound in an amount of 55 wt% or more, 65 wt% or more, 75 wt% or more, 85 wt% or more, 95 wt% or more, or 99 wt% or more, or 100 wt%, relative to the total weight.

In addition, the term acrylic compound (or (meth)acrylate) as used herein is a term including acrylate and methacrylate, which means, specifically, acrylic acid, methacrylic acid, a derivative of acrylic acid, or a derivative of methacrylic acid.

The term acrylic compound (or (meth)acrylate) as used herein may be represented by a compound represented by Formula A below.

[Formula A]

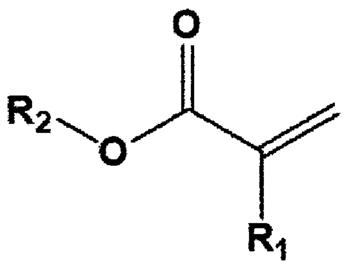

In Formula A above, $R_1$ may be hydrogen or an alkyl group having 1 to 20 carbon atoms. In addition, $R_2$ may be hydrogen or halogen (fluorine (F), chloro (Cl), iodine (I), bromo (Br)), an alkyl group unsubstituted or substituted with the aforementioned substituent, an alkenyl group unsubstituted or substituted with the aforementioned substituent, an alkynyl group unsubstituted or substituted with the aforementioned substituent, an aryl group unsubstituted or substituted with the aforementioned substituent, a heteroaryl group unsubstituted or substituted with the aforementioned substituent, or a

hydroxy group.

In Formula A, when $R_1$ is hydrogen and $R_2$ is hydrogen, it is acrylic acid, and when $R_1$ is a methyl group and $R_2$ is hydrogen, it is methacrylic acid.

Also, in Formula A, when $R_1$ is hydrogen and $R_2$ is not hydrogen, it can be called an acrylic acid derivative; and when $R_1$ is a methyl group and $R_2$ is not hydrogen, it can be called a methacrylic acid derivative.

The compound of Formula A may be exemplified by, for example, (meth)acrylic acid; alkyl (meth)acrylates including methyl (meth)acrylate, ethyl (meth)acrylate, propyl (meth)acrylate, butyl (meth)acrylate, 2-ethylhexyl (meth) acrylate, isooctyl (meth)acrylate, isodecyl (meth)acrylate, lauryl (meth)acrylate, cyclohexyl (meth)acrylate, dicyclopentanyl (meth)acrylate, dicyclopentenyl (meth)acrylate, dicyclopenetenyloxyethyl (meth)acrylate and stearyl (meth)acrylate; aryl (meth)acrylates including phenyl (meth)acrylate, 3-phenoxypropyl (meth)acrylate and nonylphenol ethylene oxide-modified (meth)acrylate; ether-based (meth)acrylates including methoxymethyl (meth)acrylate, ethoxymethyl (meth)acrylate, propoxymethyl (meth)acrylate, butoxymethyl (meth)acrylate, isobutoxymethyl (meth)acrylate, methoxyethyl (meth)acrylate, ethoxyethyl (meth)acrylate, oxiranyl (meth)acrylate, oxetanyl (meth)acrylate, tetrahydrofuranyl (meth)acrylate, tetrahydro-2H-pyranyl (meth)acrylate, oxiranylmethyl (meth)acrylate (or glycidyl (meth)acrylate), oxetanylethyl (meth)acrylate and tetrahydrofuranylmethyl (meth)acrylate (or tetrahydrofurfuryl (meth)acrylate); (meth)acrylates containing a hydroxy group including 2-hydroxyethyl (meth)acrylate, 2-hydroxypropyl (meth)acrylate, 3-hydroxypropyl (meth)acrylate, 4-hydroxybutyl (meth)acrylate, 2,3-dihydroxypropyl (meth)acrylate, 2,2-dihydroxyethyl (meth) acrylate, polyethylene glycol mono(meth)acrylate, polypropylene glycol mono(meth)acrylate, alkyloxypolyethylene glycol mono(meth)acrylate and alkyloxypolypropylene glycol mono(meth)acrylate, and the like, but is not limited thereto.

The curable composition may comprise a polyorganosiloxane component in an amount of 50 wt% or more, 52 wt% or more, 54 wt% or more, 56 wt% or more, 58 wt% or more, 60 wt% or more, 62 wt% or more, 64 wt% or more, 66 wt% or more, or 68 wt% or more, or in an amount of 95 wt% or less, 94 wt% or less, 93 wt% or less, or 92 wt% or less, relative to the total weight. When the polyorganosiloxane component is included within the above range, it is possible to secure an excellent residual bond ratio as well as an appropriate release peel force.

In the curable composition, the polyorganosiloxane component comprises a first polyorganosiloxane component represented by Formula 1 below. The curable composition comprises the first polyorganosiloxane component represented by Formula 1 below, whereby it is possible to secure an excellent residual bond ratio as well as an appropriate release peel force.

[Formula 1]

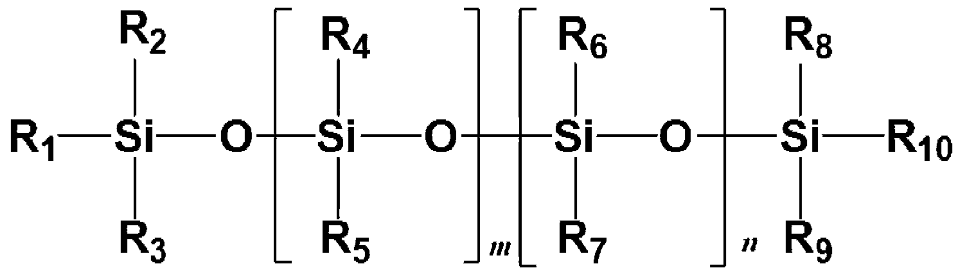

In Formula 1, $R_1$, $R_7$ and $R_{10}$ may each independently be an alkenyl group with 2 to 20 carbon atoms, 2 to 18 carbon atoms, 2 to 16 carbon atoms, 2 to 14 carbon atoms, 2 to 12 carbon atoms, 2 to 10 carbon atoms, 2 to 8 carbon atoms, 2 to 6 carbon atoms, or 2 to 4 carbon atoms; an isocyanate group; or an amine group. At least three functional groups in the first polyorganosiloxane component represented by Formula 1 include an alkenyl group; an isocyanate group, or an amine group, whereby it is possible to secure an excellent level of curing properties.

In Formula 1, $R_2$, $R_3$, $R_4$, $R_5$, $R_6$, $R_8$ and $R_9$ may each independently be an alkyl group with 1 to 20 carbon atoms, 1 to 18 carbon atoms, 1 to 16 carbon atoms, 1 to 14 carbon atoms, 1 to 12 carbon atoms, 1 to 10 carbon atoms, 1 to 8 carbon atoms, 1 to 6 carbon atoms, 1 to 4 carbon atoms, or 1 to 3 carbon atoms; an alkenyl group with 2 to 20 carbon atoms, 2 to 18

carbon atoms, 2 to 16 carbon atoms, 2 to 14 carbon atoms, 2 to 12 carbon atoms, 2 to 10 carbon atoms, 2 to 8 carbon atoms, 2 to 6 carbon atoms, or 2 to 4 carbon atoms; an isocyanate group; or an amine group.

Also, in Formula 1, m and n may each independently be a number within a range of 1 to 10,000, 1 to 8,000, 1 to 6,000, 1 to 4,000, 1 to 3,000, 1 to 2,000, or 1 to 1,000. Furthermore, specifically, in Formula 1, m may be in the range of 1 to 5,000, 10 to 4,500, 50 to 5,000, 100 to 4,500, 500 to 4,000, or 1,000 to 3,000. Furthermore, in Formula 1, n may be in the range of 1 to 100, 2 to 75, 3 to 50, or 4 to 25.

The first polyorganosiloxane component of the curable composition may have a weight average molecular weight of 100,000 g/mol or more, 125,000 g/mol or more, 150,000 g/mol or more, 175,000 g/mol or more, 200,000 g/mol or more, 225,000 g/mol or more, 250,000 g/mol or more, 275,000 g/mol or more, or 300,000 g/mol or more, or 1,000,000 g/mol or less, 950,000 g/mol or less, 900,000 g/mol or less, 850,000 g/mol or less, 800,000 g/mol or less, 750,000 g/mol or less, 700,000 g/mol or less, 650,000 g/mol or less, 600,000 g/mol or less, 550,000 g/mol or less, 500,000 g/mol or less, 450,000 g/mol or less, or 400,000 g/mol or less. When the first polyorganosiloxane component has a weight average molecular weight within the above range, an appropriate viscosity may be secured, and thus excellent coating properties may be secured.

The first polyorganosiloxane component of the curable composition may have a polydispersity index (PDI) in a range of 1 to 5, 1.25 to 3.5, or 1.5 to 2.5. When the first polyorganosiloxane component does not have a polydispersity index within the above range, the content of components having a small molecular weight compared to the desired weight average molecular weight is increased, so that there may be a problem of deterioration of physical properties of the cured product.

In the curable composition, the polyorganosiloxane component may comprise the first polyorganosiloxane compoment in an amount of 70 wt% or more, 75 wt% or more, 80 wt% or more, 85 wt% or more, 90 wt% or more, or 95 wt% or more, or in an amount of 99.9 wt% or less, 99 wt% or less, or 98 wt% or less, relative to the total weight of the polyorganosiloxane component. When the first polyorganosiloxane component is included within the above range, it is possible to secure an excellent residual bond ratio as well as an appropriate release peel force.

In the curable composition, the polyorganosiloxane component comprises a second polyorganosiloxane component represented by Formula 2 below. As the curable composition comprises a second polyorganosiloxane component represented by Formula 2 below, the cross-linking density is improved, whereby it is possible to ensure excellent durability.

[Formula 2]

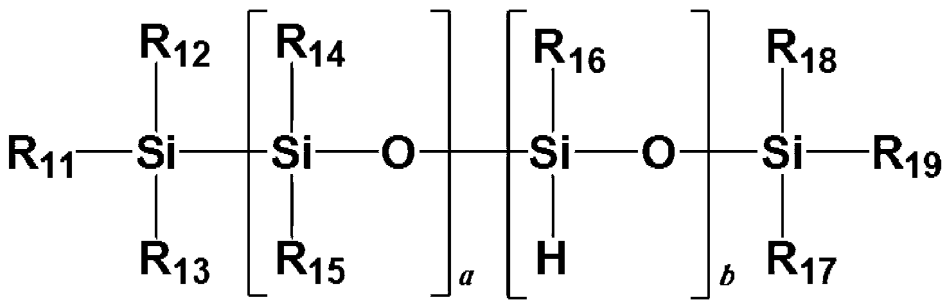

In Formula 2, $R_{11}$ to $R_{19}$ may each independently be an alkyl group with 1 to 20 carbon atoms, 1 to 18 carbon atoms, 1 to 16 carbon atoms, 1 to 14 carbon atoms, 1 to 12 carbon atoms, 1 to 10 carbon atoms, 1 to 8 carbon atoms, 1 to 6 carbon atoms, 1 to 4 carbon atoms, or 1 to 3 carbon atoms.

Also, in Formula 2, a and b may each independently be a number within a range of 1 to 10,000, 1 to 8,000, 1 to 6,000, 1 to 4,000, 1 to 3,000, 1 to 2,000, or 1 to 1,000. In addition, specifically, in Formula 2, a and b may each independently be in the range of 2 to 500, 5 to 250, 10 to 200, 15 to 150, 20 to 100, or 25 to 50.

The second polyorganosiloxane component of the curable composition may have a weight average molecular weight of 1,000 g/mol or more, 1,500 g/mol or more, 2,000 g/mol or more, 2,500 g/mol or more, 3,000 g/mol or more, 3,500 g/mol or more, 4,000 g/mol or more, 4,500 g/mol or more, 5,000 g/mol or more, 5,500 g/mol or more, 6,000 g/mol or more, 6,500 g/mol or more, 7,000 g/mol or more, 7,500 g/mol or more, or 8,000 g/mol or more, or 50,000 g/mol or less, 45,000 g/mol or less, 40,000 g/mol or less, 35,000 g/mol or less, 30,000 g/mol or less, 25,000 g/mol or less, 20,000 g /mol or less, 15,000 g/mol or less, or 12,000 g/mol or less. When the second polyorganosiloxane component has a weight average molecular weight within the above range, it is possible to ensure excellent curability.

The second polyorganosiloxane component of the curable composition may have a polydispersity index (PDI) in a range of 1 to 5, 1.25 to 3.5, or 1.5 to 2.5. When the second polyorganosiloxane component has a polydispersity index within the above range, it is possible to ensure excellent curability, and uniform cross-linking density and curability.

The curable composition may comprise the second polyorganosiloxane component in an amount of 0.1 parts by weight or more, 0.25 parts by weight or more, 0.5 parts by weight or more, 0.75 parts by weight or more, 1 part by weight or more, 1.25 parts by weight or more, 1.5 parts by weight or more, 1.75 parts by weight or more, or 2 parts by weight or more, or in an amount of 10 parts by weight or less, 8 parts by weight or less, 6 parts by weight or less, or 4 parts by weight or less, relative to 100 parts by weight of the first polyorganosiloxane component. When the second polyorganosiloxane component is included within the above range, the appropriate cross-linking density is improved, whereby it is possible to ensure excellent durability.

The curable composition comprises a redox catalyst, as described above.

In the manufacturing process of optical materials, such as a polarizing plate and a retardation plate, which are materials constituting a liquid crystal display, the surface protection film for protecting the surface of the optical material is used. The surface protection film comprises a release layer and a pressure-sensitive adhesive layer, wherein the pressure-sensitive adhesive layer is generally made of an acrylic composition comprising an acrylic compound. Here, in order to prepare the pressure-sensitive adhesive layer, a process of curing the acrylic composition using heat or energy rays, and the like is performed.

The curable composition may form a cured product capable of curing the acrylic compound forming the pressure-sensitive adhesive layer while performing a surface protection function. In order to form the pressure-sensitive adhesive layer through the curable composition, it is possible to omit a curing process using heat or energy rays, and the like in the acrylic composition, and by simplifying the process, productivity may be improved and costs may be reduced.

The redox catalyst of the curable composition may comprise one or more selected from the group consisting of a naphthenate metal salt such as cobalt(II) naphthenate; an acetate hydrate metal salt such as cobalt(II) acetate tetrahydrate; an alkanoate metal salt such as cobalt(II) 2-ethylhexanoate; a sulfate hydrate metal salt such as iron(II) sulfate hydrate; an acetylacetonate metal salt such as iron(II) acetylacetonate; a halogenide metal salt such as copper(I) chloride, and an alkoxide metal salt such as titanium(IV) isopropoxide. In the redox catalyst, the metal salt may be a salt of a transition metal, where the transition metal may be, for example, titanium (Ti), chromium (Cr), manganese (Mn), iron (Fe), cobalt (Co), nickel (Ni), copper (Cu), zinc (Zn), molybdenum (Mo), lead (Pd), silver (Ag), or cadmium (Cd), and the like, but is not limited thereto.

The curable composition comprises the redox catalyst in an amount of 0.01 parts by weight or more, 0.05 parts by weight or more, 0.1 parts by weight or more, 0.2 parts by weight or more, 0.3 parts by weight or more, 0.4 parts by weight or more, 0.5 parts by weight or more, 0.6 parts by weight or more, 0.7 parts by weight or more, or 0.8 parts by weight or more, and in an amount of 80 parts by weight or less, 75 parts by weight or less, 70 parts by weight or less, 65 parts by weight or less, 60 parts by weight or less, 55 parts by weight or less, 50 parts by weight or less, or 45 parts by weight or less, relative to 100 parts by weight of the polyorganosiloxane component. As the redox catalyst is included within the above range, it is possible to secure an excellent residual bond ratio as well as an appropriate release peel force, while curing the acrylic compound forming the pressure-sensitive adhesive layer.

The curable composition may comprise the redox catalyst in an amount of 0.01 parts by weight or more, 0.05 parts by weight or more, 0.1 parts by weight or more, 0.2 parts by weight or more, 0.3 parts by weight or more, 0.4 parts by weight or more, 0.5 parts by weight or more, 0.6 parts by weight or more, 0.7 parts by weight or more, or 0.8 parts by weight or more, or in an amount of 80 parts by weight or less, 75 parts by weight or less, 70 parts by weight or less, 65 parts by weight or less, 60 parts by weight or less, 55 parts by weight or less, 50 parts by weight or less, or 45 parts by weight or less, relative to 100 parts by weight of the first polyorganosiloxane component. Especially, when the redox catalyst is combined with the above-described first polyorganosiloxane component and included within the above range, it is possible to secure an excellent residual bond ratio as well as an appropriate release peel force, while efficiently curing the acrylic compound forming the pressure-sensitive adhesive layer.

The curable composition may further comprise a metal catalyst to advance the reaction for forming a cured product. The metal catalyst may comprise one or more selected from the group consisting of aluminum, bismuth, lead, mercury, tin, zinc, platinum, silver, and zirconium as a central metal element. In addition, in the metal catalyst, a siloxane group, an ester group, an ether group, or a carboxy group may also be bonded to the central metal element. The metal catalyst may be, for example, bis[1,3-bis(2-ethenyl)-1,1,3,3-tetramethyldisiloxane]platinum (CAS No. 81032-58-8), dibutyltin dilaurate or dimethyltin diacetate, and the like, but is not particularly limited thereto, and may be used without limitation as long as it can be generally used in the art.

The metal catalyst is preferably a platinum catalyst including platinum (Pt) as a central metal element in consideration of the components included in the curable composition. In addition, the curable composition may comprise the platinum catalyst in an amount of 0.1 parts by weight or more, 0.5 parts by weight or more, 1 part by weight or more, 1.5 parts by weight or more, 2 parts by weight or more, 2.5 parts by weight or more, or 3 parts by weight or more, or in an amount of 10 parts by weight or less, 9 parts by weight or less, 8 parts by weight or less, 7 parts by weight or less, 6 parts by weight or less, 5 parts by weight or less, or 4 parts by weight or less, relative to 100 parts by weight of the polyorganosiloxane component. Furthermore, when the content ratio of the platinum catalyst satisfies the above range, it is possible to effectively progress the cured product formation reaction while reducing side reactions.

The curable composition may further comprise one, or two or more additives exemplified below in order to secure additional physical properties. However, the additive is satisfied if it can be generally used in the art, and is not necessarily limited to the additives exemplified below.

The curable composition may further comprise a dispersant. As the dispersant, for example, polyamideamines and their salts, polycarboxylic acids and their salts, modified polyurethanes, modified polyesters, modified poly(meth) acrylates, (meth)acrylic copolymers, naphthalenesulfonic acid formalin condensates, polyoxyethylene alkyl phosphate esters, polyoxyethylene alkylamines and pigment derivatives, and the like may be used, but any dispersant known in the art may be used without limitation. For example, Disperbyk-1799 (BYK) above, and the like may be used.

The curable composition may further comprise a plasticizer, if necessary. The type of the plasticizer is not particularly limited, but for example, one or more of a phthalic acid compound, a phosphoric acid compound, an adipic acid compound, a sebacic acid compound, a citric acid compound, a glycolic acid compound, a trimellitic acid compound, a polyester compound, an epoxidized soybean oil, chlorinated paraffin, a chlorinated fatty acid ester, a fatty acid compound, and a vegetable oil may be selected and used.

As the phthalic acid compound, one or more of dimethyl phthalate, diethyl phthalate, dibutyl phthalate, dihexyl phthalate, di-n-octyl phthalate, di-2-ethylhexyl phthalate, diisooctyl phthalate, dicapryl phthalate, dinonyl phthalate, diisononyl phthalate, didecyl phthalate, diundecyl phthalate, dilauryl phthalate, ditridecyl phthalate, dibenzyl phthalate, dicyclohexyl phthalate, butyl benzyl phthalate, octyl decyl phthalate, butyl octyl phthalate, octyl benzyl phthalate, n-hexyl n-decyl phthalate, n-octyl phthalate and n-decyl phthalate may be used. As the phosphoric acid compound, one or more of tricresyl phosphate, trioctyl phosphate, triphenyl phosphate, octyl diphenyl phosphate, cresyl diphenyl phosphate and trichloroethyl phosphate may be used. As the adipic acid compound, one or more of dibutoxyethoxyethyl adipate (DBEEA), dioctyl adipate, diisooctyl adipate, di-n-octyl adipate, didecyl adipate, diisononyl adipate (DINA), diisodecyl adipate (DIDP), n-octyl n-decyl adipate, n-heptyl adipate and n-nonyl adipate may be used. As the sebacic acid compound, one or more of dibutyl sebacate, dioctyl sebacate, diisooctyl sebacate and butyl benzyl sebacate may be used. As the citric acid compound, one or more of triethyl citrate, acetyl triethyl citrate, tributyl citrate, acetyl tributyl citrate and acetyl trioctyl citrate may be used. As the glycolic acid compound, one or more of methyl phthalyl ethyl glycolate, ethyl phthalyl ethyl glycolate and butyl phthalyl ethyl glycolate may be used. As the trimellitic acid compound, one or more of trioctyl trimellitate and tri-n-octyl n-decyl trimellitate may be used. The polyester compound may be a reaction product of a diol selected from butane diol, ethylene glycol, propane 1,2-diol, propane 1,3-diol, polyethylene glycol, glycerol, a diacid (selected from adipic acid, succinic acid and succinic anhydride) and a hydroxy acid (such as, hydroxystearic acid).

The curable composition may further comprise a reaction accelerator, if necessary. The reaction accelerator may perform a function of accelerating the polymerization reaction of the curable composition. The type of the reaction accelerator is not particularly limited, but for example, N,N-dimethyl-p-toluidine (DMPT), and the like may be used.

The curable composition may comprise a viscosity modifier, for example, a thixotropic agent, a diluent, a surface treatment agent, a dispersion stabilizer, a reaction controlling agent, or a coupling agent, and the like, if necessary, for controlling the viscosity, for example, increasing or decreasing the viscosity, or for controlling the viscosity according to shear force. The thixotropic agent may adjust the viscosity of the curable composition according to shear force. The usable thixotropic agent may be exemplified by fumed silica and the like. The diluent is generally used to lower the viscosity of the curable composition, and if it may exhibit such an action, various types of diluents known in the art may be used without limitation. The surface treatment agent is for surface treatment of the filler composition introduced into the cured product of the curable composition, and if it may exhibit such an action, various types known in the art may be used without limitation. The dispersion stabilizer may be used to stabilize dispersibility between the components in the curable composition, and various types of those known in the art may be used without limitation if they can exhibit the above-described action. The reaction controlling agent may be used to control a chemical reaction such as curing of the curable composition, and various types of those known in the art may be used without limitation if it can exhibit the above action. In the case of the coupling agent, for example, it may be used to improve dispersibility between components in the curable composition, and specifically, a silane coupling agent may be used, and for example, Shin-Etsu's KBM403 or KBM-5103, and the like may be used. In addition, if it can exhibit the above action, various types of those known in the art may be used without limitation.

The curable composition may be dispersed by a solvent. The term dispersion as used herein may mean a state where a solute is dissolved by a solvent, and may mean a state where the solute is evenly distributed in the solvent even though it is not dissolved therein.

The solvent may be suitably an organic solvent in consideration of the composition of the curable composition. The organic solvent is not particularly limited if it is generally used in the art, where tetrahydrofuran, methyl ethyl ketone, toluene and heptane, or a solvent in which they are mixed may be used.

The solvent may be used to such an extent that the curable composition is sufficiently dispersed. Specifically, it is not particularly limited, but the solvent may be used in an amount of 500 parts by weight or more, 600 parts by weight or more, 700 parts by weight or more, 800 parts by weight or more, 900 parts by weight or more, 1,000 parts by weight or more, 1,100 parts by weight or more, 1,200 parts by weight or more, 1,300 parts by weight or more, 1,400 parts by weight or more, or 1,500 parts by weight or more, relative to 100 parts by weight of the curable composition.

The curable composition can cure the acrylic composition through the combination of the polyorganosiloxane component and the redox catalyst, as described above, and have various physical properties by securing excellent curing properties for the acrylic composition. In addition, the curable composition can cure the acrylic composition even without using heat and/or active energy rays, and have various physical properties by securing excellent curing properties even in such curing.

The curable composition can cure the acrylic composition at a curing temperature of 10°C or more, 12.5°C or more, 15°C or more, 17.5°C or more, 20°C or more, or 60°C or less, 57.5°C or less, 55°C or less, 52.5°C or less, or 50°C or less.

The curable composition may have a residual bond ratio ($A_d$) of 80% or more, 81% or more, 82% or more, 83% or more, 84% or more, or 85% or more according to General Equation 1 below. The upper limit of the residual bond ratio ($A_d$) is not particularly limited, but may be 100% or less, less than 100%, or 99% or less. The residual bond ratio ($A_d$) according to General Equation 1 may be specifically measured according to the following physical property measurement method. That is, the curable composition can secure the residual bond ratio according to General Equation 1 below at an excellent level by properly curing the acrylic composition.

[General Equation 1]

$$\text{Residual bond ratio } (A_d) = A_f/A_i \times 100\ (\%)$$

In General Equation 1, $A_i$ is the release peel force at 25°C of the cured product of the acrylic composition as measured at the interface of the PET (polyethylene terephthalate) film with a peel angle of 180 degrees and a peel rate of 0.3 m/min, and $A_f$ is the release peel force at 25°C of the cured product of the acrylic composition as measured with a peel angle of 180 degrees and a peel rate of 0.3 m/min after measuring the $A_i$, and then attaching it to the interface of the PET film again.

By appropriately curing an acrylic composition, the curable composition according to one example of the present application may have a release peel force at 25°C of 19.3 N/m (50 gf/inch) or less, 17.4 N/m (45 gf/inch) or less, 15.4 N/m (40 gf/inch) or less, or 13.5 N/m (35 gf/inch) or less, or 3.9 N/m (10 gf/inch) or more, 4.2 N/m (11 gf/inch) or more, 4.6 N/m (12 gf/inch) or more, 5.0 N/m (13 gf/inch) or more, 5.4 N/m (14 gf/inch) or more, or 5.8 N/m (15 gf/inch) or more as measured at the interface of a PET (polyethylene terephthalate) film with a peel angle of 180 degrees and a peel rate of 0.3 m/min with regard to the cured product of the acrylic composition. Here, the measured release peel force at 25°C may be specifically measured according to the following physical property measurement method.

By appropriately curing an acrylic composition, the curable composition according to one example of the present application satisfies unreacted material contents T1 and may satisfy unreacted material contents T2 according to General Equations 2 and 3 below, respectively, within prescribed ranges, respectively.

For the cured product of the acrylic composition cured by the curable composition, the unreacted material content ($T_1$) according to General Equation 2 is 60% or less, 58% or less, 56% or less, 54% or less, 52% or less, 50% or less, 48% or less or 46% or less. The lower the lower limit of the unreacted material content ($T_1$), the more excellent the curing properties, so that it is not particularly limited, but may be 0.01% or more, 0.1% or more, or 1% or more. When the unreacted material content ($T_1$) according to General Equation 2 below satisfies the above numerical range, it is possible to secure a curable composition such that the acrylic composition has the desired release peel force and residual bond ratio after curing while securing excellent curing properties without heat or energy ray irradiation.

[General Equation 2]

$$T_1 = 100 \times (W_A - W_B)/W_A$$

In General Equation 2, $W_A$ is the initial weight of the cured product obtained by curing the acrylic composition at 25°C, and $W_B$ is the later weight of the cured product of the acrylic composition after storing the cured product of the acrylic composition, in which the initial weight has been measured, in an oven at 150°C for 1 hour. Here, the cured product of the acrylic composition may be formed by allowing it to stand for a curing time to the extent that it is sufficiently cured at 25°C, and specifically, the curing time may be, for example, 10 hours or more, 11 hours or more, or 12 hours or more, or 30 hours or less, 25 hours or less, or 20 hours or less. The curing time may be 12 hours or 20 hours. In addition, $T_1$ according to General Equation 2 above may be specifically measured according to the following physical property measurement method.

For the cured product of the acrylic composition cured by the curable composition, the unreacted material content ($T_2$) according to General Equation 3 below may be 50% or less, 48% or less, 46% or less, 44% or less, 42% or less, or 40% or less. The lower the lower limit of the unreacted material content ($T_2$), the more excellent the curing properties, so that it is

not particularly limited, but may be 0.01% or more, 0.1% or more, or 1% or more. When the unreacted material content ($T_2$) according to General Equation 3 below satisfies the above numerical range, it is possible to secure a curable composition such that the acrylic composition has the desired release peel force and residual bond ratio after curing while securing excellent curing properties without heat or energy ray irradiation.

[General Equation 3]

$$T_2 = 100 \times (W_C - W_D)/W_C$$

In General Equation 3, $W_C$ is the initial weight of the cured product obtained by curing the acrylic composition at 50°C, and $W_D$ is the later weight of the cured product of the acrylic composition after storing the cured product of the acrylic composition, in which the initial weight has been measured, in an oven at 150°C for 1 hour. Here, the cured product of the acrylic composition may be formed by allowing it to stand for a curing time to the extent that it is sufficiently cured, and specifically, the curing time may be, for example, 10 hours or more, 11 hours or more, or 12 hours or more, or 30 hours or less, 25 hours or less, or 20 hours or less. The curing time may be 12 hours or 20 hours. In addition, $T_2$ according to General Equation 3 above may be specifically measured according to the following physical property measurement method.

The acrylic composition may comprise an acrylic polymer component and an acrylic monomer component. The acrylic polymer component may comprise a polymer in which one or two or more acrylic compounds are polymerized (or copolymerized). For example, the polymer may be obtained by adding a photoinitiator to a composition comprising (meth) acrylate containing an alkyl group and (meth)acrylate containing a hydroxyl group, followed by photoinitiation. In addition, specifically, the polymer may be obtained by setting the weight ratio (K1/K2) of (meth)acrylate (K1) containing an alkyl group and (meth)acrylate (K2) containing a hydroxyl group to 1 or more, 1.25 or more, or 1.5 or more, or 3 or less, 2.5 or less, or 2 or less.

The acrylic monomer component may comprise one or two or more acrylic compounds. For example, the acrylic monomer component may comprise (meth)acrylate containing an alkyl group and (meth)acrylate containing a hydroxyl group. For example, the acrylic monomer component may comprise (meth)acrylate containing an alkyl group in an amount of 50 wt% or more, 55 wt% or more, 60 wt% or more, 65 wt% or more, or 70 wt% or more, or 90 wt% or less, 85 wt% or less, 80 wt% or less, or 75 wt% or less, relative to the total weight of the acrylic monomer component. In addition, the acrylic monomer component may comprise (meth)acrylate containing a hydroxyl group in an amount of 10 parts by weight or more, 15 parts by weight or more, 20 parts by weight or more, 25 parts by weight or more, or 50 parts by weight or less, 45 parts by weight or less, 40 parts by weight or less, or 35 parts by weight or less, relative to 100 parts by weight of the (meth) acrylate containing an alkyl group.

In the acrylic composition, the acrylic polymer component and the acrylic monomer component may be included in an appropriate content ratio, while being easily cured by the release layer, so that the cured product (which can form a pressure-sensitive adhesive layer) has excellent durability while having the desired pressure-sensitive adhesion force. Specifically, the acrylic polymer component may be included in an amount of 5 wt% or more, 6 wt% or more, 7 wt% or more, 8 wt% or more, 9 wt% or more, or 10 wt% or more, or 20 wt% or less, 19 wt% or less, 18 wt% or less, 17 wt% or less, 16 wt% or less, 15 wt% or less, 14 wt% or less, 13 wt% or less, 12 wt% or less, or 11 wt% or less, relative to the total weight of the acrylic composition. In addition, specifically, the acrylic monomer component may be included in an amount of 300 parts by weight or more, 350 parts by weight or more, 400 parts by weight or more, 450 parts by weight or more, 500 parts by weight or more, 550 parts by weight or more, 600 parts by weight or more, 650 parts by weight or more, 700 parts by weight or more, 750 parts by weight or more, 800 parts by weight or more, or 850 parts by weight or more, or 1,500 parts by weight or less, 1,400 parts by weight or less, 1,300 parts by weight or less, 1,200 parts by weight or less, 1,100 parts by weight or less, or 1,000 parts by weight or less, relative to 100 parts by weight of the acrylic polymer component.

In addition, the acrylic composition may further comprise an additive as needed, where the additive may comprise one or more selected from the group consisting of a metal catalyst, a dispersant, a plasticizer, an initiator, and a reaction accelerator. The metal catalyst, dispersant, plasticizer, and reaction accelerator may be appropriately selected from the examples as described above, and used. The initiator may comprise a peroxide compound, where the peroxide compound may be a material that initiates the polymerization reaction of the acrylic composition. The peroxide compound may be, for example, a ketone peroxide compound such as methyl ethyl ketone peroxide (MEKP), cyclohexanone peroxide, 3,3,5-trimethylcyclohexanone peroxide, methylcyclohexanone peroxide, methylacetoacetate peroxide, and acetylacetone peroxide; a hydroperoxide compound such as tert-butyl hydroperoxide, cumene hydroperoxide, diisopropylbenzene hydroperoxide, paramenthane hydroperoxide, 2,5-dimethylhexane-2,5-dihydroperoxide, and 1,1,3,3-tetramethylbutyl hydroperoxide; a diacyl peroxide compound such as acetyl peroxide, isobutyl peroxide, octanoyl peroxide, decanoyl peroxide, laurinoyl peroxide, 3,3,5-trimethylhexanoyl peroxide, succinic acid peroxide, benzoyl peroxide, 2,4-dichlorobenzoyl peroxide, and meth-toluyl peroxide; or an acyl peroxide compound such as benzoyl peroxide (BPO), but is not limited thereto. In addition, the peroxide compound may use one, or two or more types.

The protective film according to the present application comprises a base film and a cured product of the curable composition. The protective film comprises a base film, a pressure-sensitive adhesive layer, and a release layer, where the curable composition may be formed as the release layer, and may cure an acrylic composition to form the pressure-sensitive adhesive layer.

The protective film may specifically be a protective film for an optical element. For example, it may be used as a protective film for an optical element, such as a polarizing plate, a polarizer, a polarizer protective film, a retardation film, a viewing angle compensation film, and a brightness enhancement film. The terms polarizer and polarizing plate as used herein refer to objects that are distinct from each other. That is, the polarizer refers to a film, sheet, or element itself exhibiting a polarizing function, and the polarizing plate means an optical element comprising other components together with the polarizer. Other components that may be included in the optical element together with the polarizer may exemplified by a polarizer protective film or a retardation layer, and the like, but are not limited thereto.

In addition, the protective film may be effectively used as a protective film for protecting the surfaces of optical elements, such as a polarizing plate, a retardation plate, an optical compensation film, a reflective sheet, and a brightness enhancement film, which are used for various optical devices or parts, or display devices or parts, for example, LCD, and the like, but the use is not limited to the protective film.

As the base film included in the protective film according to the present application, a general film or sheet known in the art may be used. For example, it may include a plastic film, such as a polyester film such as polyethylene terephthalate or polybutylene terephthalate, a polytetrafluoroethylene film, a polyethylene film, a polypropylene film, a polybutene film, a polybutadiene film, a poly(vinyl chloride) film, or a polyimide film. Such a film may be composed of a single layer, or may also be laminated with two or more layers, and may also further comprise a functional layer such as an antifouling layer or an antistatic layer optionally. In addition, from the viewpoint of improving adhesiveness to the base material, a surface treatment such as a primer treatment may be performed on one or both sides of the base material.

The thickness of the base film is not particularly limited as being appropriately selected according to the use, and it may be usually formed to a thickness of 5 μm to 500 μm, 5 μm to 250 μm, or 5 μm to 100 μm.

The pressure-sensitive adhesive layer included in the protective film according to the present application may be formed by curing a pressure-sensitive adhesive composition. In addition, the pressure-sensitive adhesive composition may be the above-described acrylic composition, and the pressure-sensitive adhesive layer may be formed by curing the acrylic composition. Specifically, the pressure-sensitive adhesive layer may be formed by applying it on a release layer to be described below, and then curing it. Here, the acrylic composition is the same as the above-described contents, so that a detailed description thereof will be omitted. In addition, the application method of the acrylic composition is not particularly limited if it is generally used in the art, and for example, there is knife coating, roll coating, or reverse coating, and the like. In addition, when forming the pressure-sensitive adhesive layer, it is preferably performed after sufficiently removing the bubble-inducing components such as volatile components or reaction residues inside the acrylic composition. Accordingly, it is possible to prevent problems and the like that the cross-linking density or molecular weight of the pressure-sensitive adhesive layer is too low, resulting in the elastic modulus decrease, and the bubbles existing between the glass plate and the pressure-sensitive adhesive layer become large at a high temperature, thereby forming scatterers inside.

The thickness of the pressure-sensitive adhesive layer included in the protective film is not particularly limited, which may be, for example, 2 μm to 100 μm or 5 μm to 50 μm.

The pressure-sensitive adhesive layer of the protective film according to the present application may have a residual bond ratio ($A_d$) of 80% or more, 81% or more, 82% or more, 83% or more, 84% or more, or 85% or more according to General Equation 1 below. The upper limit of the residual bond ratio ($A_d$) is not particularly limited, but may be 100% or less, less than 100%, or 99% or less. The residual bond ratio ($A_d$) according to General Equation 1 may be specifically measured according to the following physical property measurement method. In addition, when the pressure-sensitive adhesive layer of the protective film has a residual bond ratio within the above range, it is possible to secure a protective film having excellent re-workability.

[General Equation 1]

$$\text{Residual bond ratio } (A_d) = A_f/A_i \times 100\ (\%)$$

In General Equation 1, $A_i$ is the release peel force at 25°C of the pressure-sensitive adhesive layer as measured at the interface of the PET (polyethylene terephthalate) film with a peel angle of 180 degrees and a peel rate of 0.3 m/min, and $A_f$ is the release peel force at 25°C of the pressure-sensitive adhesive layer as measured with a peel angle of 180 degrees and a peel rate of 0.3 m/min after measuring the $A_i$, and then attaching it to the interface of the PET film again.

The pressure-sensitive adhesive layer of the protective film according to the present application has a release peel force at 25°C of 19.3 N/m (50 gf/inch) or less, 17.4 N/m (45 gf/inch or less, 15.4 N/m 840 gf/inch) or less, or 13.5 N/m (35 gf/inch) or less, or 3.9 N/m (10 gf/inch) or more, 4.2 N/m (11 gf/inch) or more, 4.6 N/m (12 gf/inch) or more, 5.0 N/m (13 gf/inch) or more, 5.4 N/m (14 gf/inch) or more, or 5.8 N/m (15 gf /inch) or more as measured at the interface of the PET

(polyethylene terephthalate) film with a peel angle of 180 degrees and a peel rate of 0.3 m/min. Here, the measured release peel force at 25°C may be specifically measured according to the following physical property measurement method. In addition, when the pressure-sensitive adhesive layer of the protective film has the release peel force at 25°C within the above range, it is possible to prevent the surface of the adherend from being damaged when peeling the protective film in the process while preventing separation from the adherend to protect the surface thereof.

The release layer included in the protective film according to the present application may be obtained by curing the above-described curable composition according to one example of the present application. Here, the method of curing the curable composition is not particularly limited, and it may be cured through an appropriate aging process or in an appropriate high temperature environment or light irradiation environment. The thickness of the release layer included in the protective film is not particularly limited, which may be, for example, 10 nm to 10 μm, 10 nm to 1 μm, or 10 nm to 100 nm.

In the pressure-sensitive adhesive layer of the protective film according to the present application, curing properties of the acrylic composition and the physical properties according to the curing properties may be determined depending on the composition and content ratio of the curable composition forming the release layer. Here, the pressure-sensitive adhesive layer may be formed by curing the acrylic composition, as described above, where it may be performed at a curing temperature of 10°C or more, 12.5°C or more, 15°C or more, 17.5°C or more, 20°C or more, or 60°C or less, 57.5°C or less, 55°C or less, 52.5°C or less, or 50°C or less. However, it has a meaning that the acrylic composition can be cured even at the curing temperature by the cured product (i.e., the release layer) of the curable composition according to one example of the present application, and the curing reaction may also be performed at 60°C or more, 65°C or more, 70°C or more, 75°C or more, or 80°C or more, which is a temperature higher than the curing temperature.

In particular, the acrylic composition may undergo an excellent curing reaction in the above temperature range without a high temperature or active energy rays (e.g., ultraviolet rays, etc.) based on the redox catalyst included in the release layer.

The curing properties of the acrylic composition applied to the release layer may be performed by measuring unreacted material contents (TML, Total Mass Loss). The curing properties of the acrylic composition may be confirmed by the respective unreacted material contents ($T_1$ and $T_2$) according to General Equations 2 and 3 below, and if the unreacted material contents ($T_1$ and $T_2$) are within the specified ranges, respectively, the curing properties may be evaluated to be excellent.

With respect to the curing properties of the acrylic composition, the unreacted material content ($T_1$) according to General Equation 2 below is 60% or less, 58% or less, 56% or less, 54% or less, 52% or less, 50% or less, 48% or less, or 46% or less. The lower the lower limit of the unreacted material content ($T_1$), the more excellent the curing properties, so that it is not particularly limited, but may be 0.01% or more, 0.1% or more, or 1% or more. For the acrylic composition, when the unreacted material content ($T_1$) according to General Equation 2 below satisfies the numerical range, it is possible to secure the desired release peel force and residual bond ratio after curing while securing excellent curing properties without heat or energy ray irradiation.

[General Equation 2]

$$T_1 = 100 \times (W_A - W_B)/W_A$$

In General Equation 2, $W_A$ is the initial weight of the cured product obtained by curing the acrylic composition at 25°C, and $W_B$ is the later weight of the cured product of the acrylic composition after storing the cured product of the acrylic composition, in which the initial weight has been measured, in an oven at 150°C for 1 hour. Here, the cured product of the acrylic composition may be formed by allowing it to stand for a curing time to the extent that it is sufficiently cured at 25°C, and specifically, the curing time may be, for example, 10 hours or more, 11 hours or more, or 12 hours or more, or 30 hours or less, 25 hours or less, or 20 hours or less. In addition, $T_1$ according to General Equation 2 above may be specifically measured according to the following physical property measurement method.

With respect to the curing properties of the acrylic composition, the unreacted material content ($T_2$) according to General Equation 3 below may be 50% or less, 48% or less, 46% or less, 44% or less, 42% or less, or 40% or less. The lower the lower limit of the unreacted material content ($T_2$), the more excellent the curing properties, so that it is not particularly limited, but may be 0.01% or more, 0.1% or more, or 1% or more. For the acrylic composition, when the unreacted material content ($T_2$) according to General Equation 3 below satisfies the numerical range, it is possible to secure the desired release peel force and residual bond ratio after curing while securing excellent curing properties without heat or energy ray irradiation.

[General Equation 3]

$$T_2 = 100 \times (W_C - W_D)/W_C$$

In General Equation 3, $W_C$ is the initial weight of the cured product obtained by curing the acrylic composition at 50°C, and $W_D$ is the later weight of the cured product of the acrylic composition after storing the cured product of the acrylic composition, in which the initial weight has been measured, in an oven at 150°C for 1 hour. Here, the cured product of the acrylic composition may be formed by allowing it to stand for a curing time to the extent that it is sufficiently cured, and specifically, the curing time may be, for example, 10 hours or more, 11 hours or more, or 12 hours or more, or 30 hours or less, 25 hours or less, or 20 hours or less. In addition, $T_2$ according to General Equation 3 above may be specifically measured according to the following physical property measurement method.

The optical element according to the present application may be in a state where the protective film is attached to the surface. For example, the pressure-sensitive adhesive layer of the protective film may be attached to the surface of the optical element, and accordingly, the optical element may be protected by the base film for surface protection.

The optical element included in the optical element may be exemplified by, for example, a polarizer, a polarizing plate, a polarizer protective film, a retardation layer, or a viewing angle compensation layer, and the like. Here, as the polarizer, for example, a general type known in the art, such as a polyvinyl alcohol polarizer, may be employed without limitation.

A polarizer is a functional film or sheet capable of extracting only light oscillating in one direction from light incident while oscillating in various directions. Such a polarizer may be, for example, a form in which a dichroic dye is adsorbed and oriented on a polyvinyl alcohol-based resin film. The polyvinyl alcohol-based resin constituting the polarizer can be obtained by, for example, performing gelation of a polyvinyl acetate-based resin. In this case, the usable polyvinyl acetate-based resin may include not only homopolymers of vinyl acetate but also copolymers of vinyl acetate and other monomers copolymerizable therewith. Here, an example of the monomer copolymerizable with vinyl acetate may include one or a mixture of two or more of unsaturated carboxylic acids, olefins, vinyl ethers, unsaturated sulfonic acids, and acrylamides having an ammonium group, but is not limited thereto. The polyvinyl alcohol-based resin may have a gelation degree of, typically, about 85 mol% to 100 mol%, preferably, 98 mol% or more. The polyvinyl alcohol-based resin may also be further modified, and for example, polyvinyl formal or polyvinyl acetal modified into aldehydes, and the like may also be used. The polyvinyl alcohol-based resin may have a polymerization degree of, typically, 1,000 to 10,000 or so, preferably, 1,500 to 5,000 or so.

A polyvinyl alcohol-based resin may be formed into a film and used as a discotic film of the polarizer. The film-forming method of the polyvinyl alcohol-based resin is not particularly limited, and a general method known in this field can be used. The thickness of the discotic film formed of a polyvinyl alcohol-based resin is not particularly limited, and for example, can be appropriately controlled within a range of 1 μm to 150 μm. The thickness of the discotic film can be controlled to 10 μm or more in consideration of easiness of stretching and the like. The polarizer may be produced through a process of stretching the above polyvinyl alcohol-based resin film (e.g., uniaxially stretching), a process of dyeing the polyvinyl alcohol-based resin film with a dichroic dye and adsorbing the dichroic dye, a process of treating the polyvinyl alcohol-based resin film adsorbed by the dichroic dye with a boric acid aqueous solution and a process of washing after treating with the boric acid aqueous solution, and the like. Here, as the dichroic dye, iodine or a dichroic organic dye, and the like may be used.

The polarizing plate may comprise, for example, the polarizer; and other optical films attached to one or both sides of the polarizer. Here, the other optical films may be exemplified by the above-described polarizer protective film or a retardation layer, a viewing angle compensation layer, and an antiglare layer, and the like.

Here, the polarizer protective film is a protective film for a polarizer as a concept distinct from a protective film containing the pressure-sensitive adhesive layer. The polarizer protective film may be formed of a multi-layer film in which a protective film is laminated, which is composed of, for example, a cellulose-based film such as triacetylcellulose; an acrylic film; a polyester-based film such as a polycarbonate film or a polyethylene terephthalate film; a polyether sulfone-based film; and/or a polyolefin-based film such as a polyethylene film, a polypropylene film, or a polyolefin film having a cyclo or norbornene structure or an ethylene propylene copolymer, and the like. The thickness of the protective film is also not particularly limited, and it can be formed to a usual thickness.

In the optical element, a surface treatment layer may be present on the surface of the optical element protected by the protective film. The surface treatment layer may have, for example, a surface energy of 30 mN/m or less. That is, in the optical element, the surface treatment layer having a surface energy of 30 mN/m or less may be formed on the surface of the optical element protected by the protective film, and the pressure-sensitive adhesive layer of the protective film may be attached to the surface treatment layer. Here, the method for measuring the surface energy is not particularly limited, and a known method for measuring the surface energy may be applied. For example, by measuring the contact angle of the surface of the optical element, the surface energy may be obtained therefrom, or may be measured using a known surface energy measuring device.

The surface treatment layer may be exemplified by a high hardness layer, a glare prevention layer such as an AG (anti-glare) layer or an SG (semi-glare) layer or a low reflection layer such as an AR (anti reflection) layer or an LR (low reflection) layer, and the like.

The high hardness layer may be a layer having a pencil hardness of 1H or more, or 2H or more under a load of 500

g. The pencil hardness can be measured, for example, according to ASTM D 3363 standard using a pencil lead specified in KS G2603.

The high hardness layer may be, for example, a resin layer having a high hardness. The resin layer may comprise, for example, a room temperature curable, moisture curable, thermosetting, or active energy ray curable resin composition in a cured state. In one example, the resin layer may comprise a thermosetting or active energy ray-curable resin composition, or an active energy ray-curable resin composition in a cured state. In the description of the high hardness layer, the "cured state" may mean a case where the components contained in each of the resin compositions are subjected to a cross-linking reaction or a polymerization reaction to convert the resin compositions into a hard state. In addition, the room temperature curing type, moisture curing type, thermosetting type or active energy ray curable type resin composition may mean a composition that the cured state can be induced at room temperature or can be induced in the presence of appropriate moisture, or by application of heat or irradiation of active energy rays.

In this field, various resin compositions capable of satisfying the pencil hardness within the above-mentioned range in the cured state are known, and an average skilled person can easily select a suitable resin composition.

In one example, the resin composition may comprise an acrylic compound, an epoxy compound, a urethane compound, a phenol compound, or a polyester compound, and the like as a main material. Here, the "compound" may be a monomer, an oligomer, or a polymer compound.

In one example, as the resin composition, an acrylic resin composition having excellent optical properties such as transparency and excellent resistance to yellowing, for example, an active energy ray-curable acrylic resin composition can be used.

The active energy ray-curable acrylic composition may comprise, for example, an active energy ray-polymerizable polymer component and a reactive diluting monomer.

The polymer component may be exemplified by components known as so-called active energy linear polymerizable oligomers in the industry such as urethane acrylate, epoxy acrylate, ether acrylate or ester acrylate, or polymeric substances of mixtures comprising monomers such as (meth)acrylic acid ester monomers. Here, the (meth)acrylic acid ester monomer may be exemplified by alkyl (meth)acrylate, (meth)acrylate having an aromatic group, heterocyclic (meth) acrylate or alkoxy (meth)acrylate, and the like. Various polymer components for preparing active energy ray-curable compositions are known in this field and such compounds may be selected as needed.

The reactive diluting monomer which can be contained in the active energy ray-curable acrylic composition can be exemplified by a monomer having one or two or more active energy ray-curable functional groups such as an acryloyl group or a methacryloyl group. As the reactive diluting monomer, for example, the above (meth)acrylic acid ester monomer or a multifunctional acrylate, and the like can be used.

The selection of the above-mentioned components for preparing the active energy ray-curable acrylic composition or a blending ratio of the selected components, and the like are not particularly limited and can be adjusted in consideration of the hardness and other physical properties of the desired resin layer.

As the glare prevention layer such as the AG layer or the SG layer, for example, a resin layer on which a concavo-convex surface is formed or a resin layer containing particles, in which the particles have a refractive index different from that of the resin layer, can be used.

Here, as the resin layer, for example, a resin layer used for forming the high hardness layer may be used. In the case of forming the glare prevention layer, it is not necessary to adjust the components of the resin composition so that the resin layer necessarily exhibits high hardness, but a resin layer may be formed so as to exhibit high hardness.

Here, the method of forming the concavo-convex surface on the resin layer is not particularly limited. For example, the concavo-convex structure can be realized by curing the resin composition in a state in which the coating layer of the resin composition is brought into contact with a mold having a desired concavo-convex structure or by blending particles having an appropriate particle diameter in the resin composition, followed by coating and curing.

The glare prevention layer may also be formed using particles having a refractive index different from that of the resin layer.

In one example, the particles may have, for example, a refractive index difference with the resin layer of 0.03 or less or 0.02 to 0.2. If the refractive index difference is too small, haze is hardly caused, and on the contrary, if it is too large, a lot of scattering occurs in the resin layer to increase haze, but deterioration of light transmittance or contrast characteristics, and the like may be induced, so that appropriate particles can be selected in consideration of this fact.

The shape of the particles contained in the resin layer is not particularly limited and may be, for example, spherical, elliptical, polyhedral, amorphous, or other shapes. The particles may have an average diameter of 50 nm to 5,000 nm. In one example, as the particles, particles having irregularities on the surface thereof can be used. Such particles may have an average surface roughness (Rz) of 10 nm to 50 nm or 20 nm to 40 nm, and/or a maximum height of irregularities formed on the surface of about 100 nm to 500 nm or 200 nm to 400 nm, and a width between the irregularities of 400 nm to 1,200 nm or 600 nm to 1,000 nm. Such particles have excellent compatibility with the resin layer or dispersibility therein.

As the particles, various inorganic or organic particles can be exemplified. The inorganic particles can be

exemplified by silica, amorphous titania, amorphous zirconia, indium oxide, alumina, amorphous zinc oxide, amorphous cerium oxide, barium oxide, calcium carbonate, amorphous barium titanate or barium sulfate, and the like, and the organic particles can be exemplified by particles comprising a cross-linked product or a non-cross-linked product of an organic material such as an acrylic resin, a styrene resin, a urethane resin, a melamine resin, a benzoguanamine resin, an epoxy resin or a silicone resin, but are not limited thereto.

The concavo-convex structure formed on the resin layer or the content of the particles is not particularly limited. The shape of the concavo-convex structure or the content of the particles may be controlled such that in the case of the AG layer, the haze of the resin layer is about 5% to 15%, 7% to 13%, or about 10% or so and in the case of the SG layer, the haze is about 1% to 3% or so. The haze can be measured according to the manufacturer's manual using a hazemeter such as HR-100 or HM-150 from Sepung.

The low reflection layer such as the AR layer or the LR layer can be formed by coating a low refractive material. The low refractive material capable of forming the low reflection layer is variously known, and all these materials can be suitably selected and used for the optical element. The low reflection layer can be formed to have a reflectance of about 1% or less through coating of the low refractive material.

For forming the surface treatment layer, materials known in Korean Laid-Open Patent Publication Nos. 2007-0101001, 2011-0095464, 2011-0095004, 2011-0095820, 2000-0019116, 2000-0009647, 2000-0018983, 2003-0068335, 2002-0066505, 2002-0008267, 2001-0111362, 2004-0083916, 2004-0085484, 2008-0005722, 2008-0063107, 2008-0101801 or 2009-0049557 can also be used.

The surface treatment layer may be formed alone, or in a combination of two or more. As an example of the combination, a case where a high hardness layer is first formed on the surface of the base layer and a low reflection layer is formed on the surface again can be exemplified.

A liquid crystal display (LCD) device according to one example of the present application may comprise a liquid crystal panel, and the above-described optical element may be attached to one or both sides of the liquid crystal panel.

The type of the liquid crystal panel included in the liquid crystal display device is not particularly limited. For example, without restricting the type, all the known liquid crystal panels, including various passive matrix modes including a TN (twisted nematic) type, an STN (super twisted nematic) type, an F (ferroelectric) type and a PD (polymer dispersed LCD) type, and the like; various active matrix modes including a two-terminal type and a three-terminal type; a transverse electric field type (IPS mode) panel and a vertical alignment type (VA mode) panel, can be applied. In addition, other types of constitutions other than those contained in the liquid crystal display device and the manufacturing methods thereof are not particularly limited, and general configurations in this field can be adopted and used without any limitation.

[Effects of Invention]

The present application may provide a protective film comprising a curable composition capable of forming a cured product having appropriate release peel force and residual bond ratio.

In addition, the present application may provide a protective film comprising a curable composition that cures an acrylic composition forming a pressure-sensitive adhesive layer without a curing process by heat or energy rays.

[Mode for Invention]

Hereinafter, the present application will be described with reference to Examples and Comparative Examples, but the scope of the present application is not limited by the contents presented below.

**<Preparation of curable composition>**

**Example** 1.

As a first polyorganosiloxane component, a compound (Shin-Etsu Silicone's KS-847H) represented by Formula 1A below was used, and the weight average molecular weight (Mw) of the first polyorganosiloxane component was in a range of about 300,000 to 400,000 g/mol.

[Formula 1A]

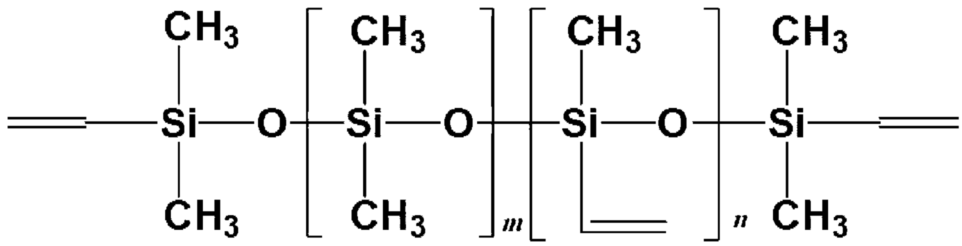

In Formula 1A, m is 1,000 to 2,000 or so, and n is 5 to 20 or so.

As a second polyorganosiloxane component, a compound (Shin-Etsu Silicone's X-92-122) represented by Formula 2A below was used, and the weight average molecular weight (Mw) of the second polyorganosiloxane component was in a range of about 8,000 to 12,000 g/mol.

[Formula 2A]

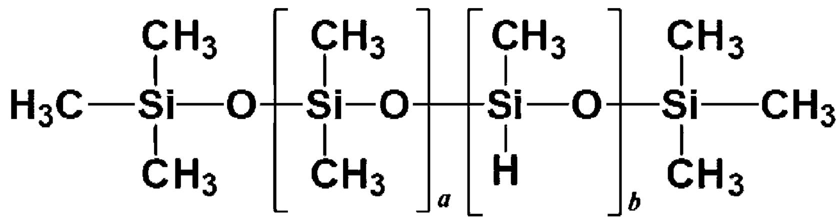

In Formula 2A, a is 25 to 45 or so, and b is 25 to 45 or so.

The first polyorganosiloxane component (PS1), the second polyorganosiloxane component (PS2), a platinum catalyst (Ptc, Shin-Etsu Silicone's PL-50L) and a redox catalyst (Rc, iron (III) acetylacetonate, Sigma-Aldrich) were added to an organic solvent in a weight ratio of 5:0.1:0.15:2 (PS1: PS2: Ptc: Rc) to prepare a curable composition dispersed in the organic solvent.

As the organic solvent, a mixture of tetrahydrofuran (THF), methylethyl ketone (MEK), toluene (T) and n-heptane (H) was used, and it was used in an amount sufficient to properly disperse the curable composition.

**Example 2.**

In Example 2, a curable composition dispersed in the organic solvent was prepared in the same manner as in Example 1 above, except that the first polyorganosiloxane component (PS1), the second polyorganosiloxane component (PS2), the platinum catalyst (Ptc, Shin-Etsu Silicone's PL-50L) and the redox catalyst (Rc, iron(III) acetylacetonate, Sigma-Aldrich), which were used in Example 1, were added to the organic solvent in a weight ratio of 5:0.1:0.15:0.04 (PS1: PS2: Ptc: Rc).

**Example 3.**

In Example 3, a curable composition dispersed in the organic solvent was prepared in the same manner as in Example 1 above, except that the first polyorganosiloxane component (PS1), the second polyorganosiloxane component (PS2), the platinum catalyst (Ptc, Shin-Etsu Silicone's PL-50L) and the redox catalyst (Rc, iron(III) acetylacetonate, Sigma-Aldrich), which were used in Example 1, were added to the organic solvent in a weight ratio of 5:0.1:0.15:0.2 (PS1: PS2: Ptc: Rc).

**Example 4.**

In Example 4, a curable composition dispersed in the organic solvent was prepared in the same manner as in Example 1 above, except that the first polyorganosiloxane component (PS1), the second polyorganosiloxane component (PS2), the platinum catalyst (Ptc, Shin-Etsu Silicone's PL-50L) and the redox catalyst (Rc, iron(III) acetylacetonate, Sigma-Aldrich), which were used in Example 1, were added to the organic solvent in a weight ratio of 5:0.1:0.15:1 (PS1: PS2: Ptc: Rc).

**Comparative Example 1.**

In Comparative Example 1, a curable composition dispersed in the organic solvent was prepared in the same manner as in Example 1 above, except that the first polyorganosiloxane component (PS1), the second polyorganosiloxane component (PS2), and the platinum catalyst (Ptc, Shin-Etsu Silicone's PL-50L), which were used in Example 1, were added to the organic solvent in a weight ratio of 5:0.1:0.15 (PS1: PS2: Ptc).

**Comparative Example 2.**

In Comparative Example 2, a curable composition dispersed in the organic solvent was prepared in the same manner as in Example 1 above, except that the first polyorganosiloxane component (PS1), the second polyorganosiloxane component (PS2), the platinum catalyst (Ptc, Shin-Etsu Silicone's PL-50L) and the redox catalyst (Rc, iron(III) acetylacetonate, Sigma-Aldrich), which were used in Example 1, were added to the organic solvent in a weight ratio of 5:0.1:0.15:5 (PS1: PS2: Ptc: Rc).

**Example 5.**

In Example 5, a curable composition dispersed in the organic solvent was prepared in the same manner as in Example 1 above, except that the first polyorganosiloxane component (PS1), the second polyorganosiloxane component (PS2), the platinum catalyst (Ptc, Shin-Etsu Silicone's PL-50L) and the redox catalyst (Rc, cobalt (III) naphtenate), which were used in Example 1, were added to the organic solvent in a weight ratio of 5:0.1:0.15:2 (PS1: PS2: Ptc: Rc).

**<Production of protective film>**

A protective film was produced by using each of the curable compositions prepared in Examples 1 to 5 and Comparative Examples 1 and 2 above.

Each of the curable compositions prepared in Examples 1 to 5 and Comparative Examples 1 and 2 above was applied to one side of each base film, and cured at 150°C for 3 minutes to form a release layer on the base film. At this time, the thickness of the release layer was about 50 to 80nm or so, and a PET (polyethylene terephthalate) film having a thickness of about 50 μm or so was used as the base film.

Hereinafter, an acrylic composition was applied to a thickness of 20 to 30 μm or so on the release layer, and the acrylic composition was cured to prepare a protective film having a pressure-sensitive adhesive layer formed thereon. At this time, as the acrylic composition, Acrylic Composition A or Acrylic Composition B was used.

Acrylic Composition A above was prepared by mixing an acrylic polymer component (AP), in which 2-ethylhexyl acrylate (2-EHA) and hydroxyethyl acrylate (HEA) were mixed in a weight ratio of 6:4 (2-EHA: HEA) and then polymerized, an acrylic monomer component (AM), in which hydroxyethyl acrylate (HEA) and butyl acrylate (BA) were mixed in a weight ratio of 3:1 (HEA: BA), and 1,6-hexanediol diacrylate (HDDA) as a curing agent in a weight ratio of 10:85:1 (AP: AM: HDDA) to obtain a mixture, adding an initiator (cumene hydroperoxide, CHP) to the mixture in an amount of about 1 part by weight relative to the total weight of the mixture, and adding a reducing agent ( N,N-dimethyl-p-toluidine, DMPT) thereto in an amount of about 0.6 parts by weight relative to the total weight of the mixture.

In addition, Acrylic Composition B above was prepared by mixing an acrylic polymer component (AP), in which 2-ethylhexyl acrylate (2-EHA) and hydroxyethyl acrylate (HEA) were mixed in a weight ratio of 6:4 (2-EHA: HEA) and then polymerized, an acrylic monomer component (AM), in which hydroxyethyl acrylate (HEA) and glycidyl methacrylate (GMA) were mixed in a weight ratio of 3:1 (HEA: GMA), and a urethane acrylate curing agent (Shin A&C, SUO-1000) as a curing agent in a weight ratio of 10:85:5 (AP: AM: SUO-1000) to obtain a mixture, adding an initiator (methyl ethyl ketone peroxide, MEKP) to the mixture in an amount of about 2 parts by weight relative to the total weight of the mixture, and adding a reducing agent (N,N-dimethyl-p-toluidine, DMPT) thereto in an amount of about 0.6 parts by weight relative to the total weight of the mixture.

Table 1 below shows examples of the respective protective films using the curable compositions. Here, the curable composition becomes the release layer of the protective film, and the acrylic composition becomes the pressure-sensitive adhesive layer of the protective film.

[Table 1]

| Protective film | Curable composition | Acrylic composition |
|---|---|---|
| Example 6 | Example 1 | Acrylic composition A |
| Example 7 | Example 2 | Acrylic composition A |

(continued)

| | | |
|---|---|---|
| Example 8 | Example 3 | Acrylic composition A |
| Example 9 | Example 4 | Acrylic composition A |
| Comparative Example 3 | Comparative Example 1 | Acrylic composition A |
| Comparative Example 4 | Comparative Example 2 | Acrylic composition A |
| Example 10 | Example 5 | Acrylic composition B |
| Comparative Example 5 | Comparative Example 1 | Acrylic composition B |

**<Physical property measurement method>**

**1. Method of measuring unreacted material content (TML, total mass loss) ratio**

**(1) 25°C curing conditions**

Here, when preparing the protective film, the acrylic composition applied on the release layer was left at 25°C for 12 hours or 20 hours to form a pressure-sensitive adhesive layer. A portion of the formed pressure-sensitive adhesive layer was appropriately cut, and a PET (polyethylene terephthalate) film was attached to both sides of the cut pressure-sensitive adhesive layer to prepare a measurement sample.

The weight ($W_A$) of the measurement sample was measured and it was left in an oven at 150°C for 1 hour. The weight ($W_B$) of the measurement sample after being left in the oven was measured. Hereinafter, the unreacted material content ($T_1$) was measured according to General Equation 2 below.

[General Equation 2]

$$T_1 = 100 \times (W_A - W_B)/W_A$$

In each of Examples 6 to 9 and Comparative Examples 3 and 4, the unreacted material content ($T_1$) was measured by leaving the acrylic composition applied on the release layer at 25°C for 12 hours, and in each of Example 10 and Comparative Example 5, the unreacted material content ($T_1$) was measured by leaving the acrylic composition applied on the release layer at 25°C for 20 hours.

**(2) 50°C curing conditions**

Here, when preparing the protective film, the acrylic composition applied on the release layer was left at 50°C for 20 hours to form a pressure-sensitive adhesive layer. A portion of the formed pressure-sensitive adhesive layer was appropriately cut, and a PET (polyethylene terephthalate) film was attached to both sides of the cut pressure-sensitive adhesive layer to prepare a measurement sample.

The weight ($W_C$) of the measurement sample was measured, and it was left in an oven at 150°C for 1 hour. The weight ($W_D$) of the measurement sample after being left in the oven was measured. Hereinafter, the unreacted material content ($T_2$) was measured according to General Equation 3 below.

[General Equation 3]

$$T_2 = 100 \times (W_C - W_D)/W_C$$

The results thereof were shown in Tables 2 and 3 below.

[Table 2]

| Classification | Unreacted material content ($T_1$, %) |
|---|---|
| Example 6 | 5.73 |
| Example 7 | 44.54 |
| Example 8 | 11.44 |

(continued)

| Classification | Unreacted material content ($T_1$, %) |
|---|---|
| Example 9 | 10.02 |
| Comparative Example 3 | 89.51 |
| Comparative Example 4 | 5.24 |

[Table 3]

| Classification | Unreacted material content ($T_1$, %) | Unreacted material content ($T_2$, %) |
|---|---|---|
| Example 10 | 7.04 | 5.86 |
| Comparative Example 5 | 94.13 | 94.18 |

**2. Method of measuring release peel force and residual bond ratio**

A standard tape (TESA, TESA7475) having a PET (polyethylene terephthalate) interface was laminated on the pressure-sensitive adhesive layer of the protective film as prepared above, and stored at 70°C for 24 hours or so, and then the release peel force ($A_i$) was measured while peeling the standard tape at 25°C with a peel angle of 180 degrees and a peel rate of 0.3 m/min using a physical property measuring device (Cheminstruments, AR-1000). Here, the measured release peel force ($A_i$) was summarized in Table 4 below.

In addition, after measuring the release peel force, a standard tape (TESA, TESA7475) having a PET (polyethylene terephthalate) interface was laminated on the pressure-sensitive adhesive layer, and stored at 70°C for 24 hours or so, and then the later release peel force ($A_f$) was measured while peeling the standard tape at 25°C with a peel angle of 180 degrees and a peel rate of 0.3 m/min using a physical property measurement device (Cheminstruments, AR-1000).

The residual bond ratio was measured according to General Equation 1 below.

[General Equation 1]

$$\text{Residual bond ratio } (A_d) = A_f/A_i \times 100\ (\%)$$

In General Equation 1, $A_i$ means the above-described release peel force ($A_i$), and Af means the above-described later release peel force ($A_f$).

The results thereof were shown in Table 4 below.

[Table 4]

| Classification | Release peel force N/m (gf/inch) | Residual bond ratio ($A_d$, %) |
|---|---|---|
| Example 6 | 12.3 (31.9) | 85.97 |
| Example 7 | 6.4 (16.5) | 93.41 |
| Example 8 | 8.3 (21.5) | 91.56 |
| Example 9 | 8.6 (22.3) | 87.32 |
| Comparative Example 3 | 5.2 (13.5) | 97.10 |
| Comparative Example 4 | 384.3 (995.4) | 63.25 |
| Example 10 | 60.0 (155.3) | 77.46 |

## Claims

**1.** A protective film comprising a base film, a pressure-sensitive adhesive layer, and a release layer,

wherein the release layer comprises the cured product of a curable composition and the pressure-sensitive

adhesive layer comprises the cured product of an acrylic composition,
wherein the curable composition comprises a polyorganosiloxane component and a redox catalyst, which is for curing an acrylic composition without heat or energy ray irradiation,
wherein the polyorganosiloxane component comprises a first polyorganosiloxane component represented by Formula 1 below, and a second polyorganosiloxane component represented by Formula 2 below,
wherein the redox catalyst is included in a range of 0.01 to 80 parts by weight relative to 100 parts by weight of the polyorganosiloxane component,
wherein an unreacted material content ($T_1$) according to General Equation 2 below satisfies 60% or less, and a cured product of the acrylic composition satisfies a release peel force at 25°C of 19.3 N/m (50 gf/inch) or less as measured at an interface of a PET film with a peel angle of 180 degrees and a peel rate of 0.3 m/min:

[Formula 1]

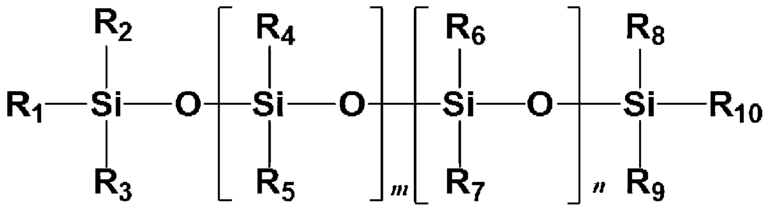

wherein,
$R_1$, $R_7$ and $R_{10}$ are each independently an alkenyl group with 2 to 20 carbon atoms, an isocyanate group, or an amine group,
$R_2$, $R_3$, $R_4$, $R_5$, $R_6$, $R_8$ and $R_9$ are each independently an alkyl group with 1 to 20 carbon atoms, an alkenyl group with 2 to 20 carbon atoms, an isocyanate group, or an amine group, and
m and n are each independently a number in a range of 1 to 10,000:

[Formula 2]

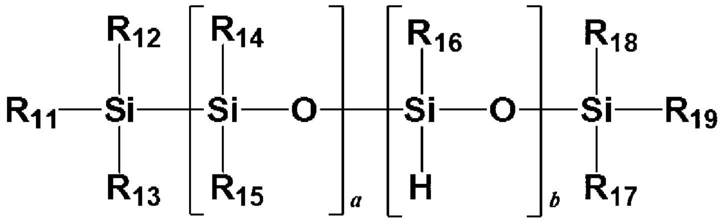

wherein,
$R_{11}$ to $R_{19}$ are each independently an alkyl group with 1 to 20 carbon atoms, and
a and b are each independently a number within a range of 1 to 10,000:
[General Equation 2] $T_1 = 100 \times (W_A - W_B)/W_A$
wherein, $W_A$ is the initial weight of the cured product obtained by curing the acrylic composition at 25°C for 12 hours or 20 hours, and $W_B$ is the later weight of the cured product of the acrylic composition, in which the initial weight has been measured, after storing the cured product of the acrylic composition in an oven at 150°C for 1 hour.

2. The protective film according to claim 1, wherein the first polyorganosiloxane component is included in an amount of 70 wt% or more relative to the total weight of the polyorganosiloxane component.

3. The protective film according to claim 1, whereinthe first polyorganosiloxane component has a weight average molecular weight (Mw) in a range of 100,000 to 1,000,000 g/mol, wherein weight average molecular weight ($M_w$) is measured using GPC (gel permeation chromatography) as disclosed in the specification.

4. The protective film according to claim 1, wherein the second polyorganosiloxane component has a weight average molecular weight (Mw) in a range of 1,000 to 50,000 g/mol, wherein weight average molecular weight ($M_w$) is measured using GPC (gel permeation chromatography) as disclosed in the specification.

5. The protective film according to claim 1, wherein the redox catalyst comprises one or more selected from the group consisting of a naphthenate metal salt, an acetate hydrate metal salt, an alkanoate metal salt, a sulfate hydrate metal salt, an acetylacetonate metal salt, a halogenide metal salt and an alkoxide metal salt.

6. The protective film according to claim 1, further comprising a platinum catalyst.

7. The protective film according to claim 1, wherein the redox catalyst is included in a range of 0.01 to 80 parts by weight relative to 100 parts by weight of the first polyorganosiloxane component.

8. The protective film according to claim 1, wherein the cured product of the acrylic composition has a residual bond ratio ($A_d$) of 80% or more according to General Equation 1 below:

[General Equation 1]

$$\text{Residual bond ratio } (A_d) = A_f/A_i \times 100\ (\%)$$

wherein, $A_i$ is the release peel force at 25°C of the cured product of the acrylic composition as measured at the interface of the PET (polyethylene terephthalate) film with a peel angle of 180 degrees and a peel rate of 0.3 m/min, and $A_f$ is the release peel force at 25°C of the cured product of the acrylic composition as measured with a peel angle of 180 degrees and a peel rate of 0.3 m/min after measuring the $A_i$, and then attaching it to the interface of the PET film again.

9. An optical element, wherein the protective film according to claim 1 is attached to one or both sides.

10. A liquid crystal display device, wherein the optical element according to claim 9 is attached to one or both sides of a liquid crystal panel.

**Patentansprüche**

1. Schutzfilm, umfassend einen Basisfilm, eine Haftklebstoffschicht und eine Trennschicht,

wobei die Trennschicht das gehärtete Produkt einer härtbaren Zusammensetzung umfasst und die Haftklebstoffschicht das gehärtete Produkt einer Acrylzusammensetzung umfasst,
wobei die härtbare Zusammensetzung eine Polyorganosiloxankomponente und einen Redoxkatalysator umfasst, der zum Härten einer Acrylzusammensetzung ohne Wärme- oder Energiestrahlenbestrahlung dient,
wobei die Polyorganosiloxankomponente eine erste Polyorganosiloxankomponente, dargestellt durch Formel 1 unten, und eine zweite Polyorganosiloxankomponente, dargestellt durch Formel 2 unten, umfasst,
wobei der Redoxkatalysator in einem Bereich von 0,01 bis 80 Gewichtsteilen, bezogen auf 100 Gewichtsteile der Polyorganosiloxankomponente, enthalten ist,
wobei ein Gehalt an nicht umgesetztem Material ($T_1$) gemäß der allgemeinen Gleichung 2 unten 60 % oder weniger erfüllt und ein gehärtetes Produkt der Acrylzusammensetzung eine Trennschälkraft bei 25 °C von 19,3 N/m (50 gf/Zoll) oder weniger, gemessen an einer Grenzfläche eines PET-Films mit einem Schälwinkel von 180 Grad und einer Schälrate von 0,3 m/min, erfüllt:

[Formel 1]

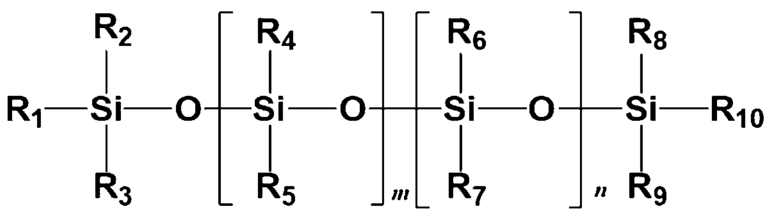

wobei
$R_1$, $R_7$ und $R_{10}$ jeweils unabhängig eine Alkenylgruppe mit 2 bis 20 Kohlenstoffatomen, eine Isocyanatgruppe

oder eine Amingruppe sind,
$R_2$, $R_3$, $R_4$, $R_5$, $R_6$, $R_8$ und $R_9$ jeweils unabhängig eine Alkylgruppe mit 1 bis 20 Kohlenstoffatomen, eine Alkenylgruppe mit 2 bis 20 Kohlenstoffatomen, eine Isocyanatgruppe oder eine Amingruppe sind und
m und n jeweils unabhängig eine Zahl in einem Bereich von 1 bis 10.000 sind:

[Formel 2]

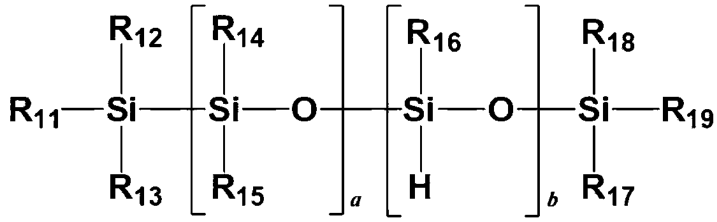

wobei
$R_{11}$ bis $R_{19}$ jeweils unabhängig eine Alkylgruppe mit 1 bis 20 Kohlenstoffatomen sind und
a und b jeweils unabhängig eine Zahl innerhalb eines Bereichs von 1 bis 10.000 sind: [Allgemeine Gleichung 2] $T_1 = 100 \times (W_A - W_B)/W_A$
wobei $W_A$ das Anfangsgewicht des gehärteten Produkts ist, das durch Härten der Acrylzusammensetzung bei 25 °C für 12 Stunden oder 20 Stunden erhalten wird, und $W_B$ das spätere Gewicht des gehärteten Produkts der Acrylzusammensetzung ist, bei dem das Anfangsgewicht gemessen wurde, nach Lagerung des gehärteten Produkts der Acrylzusammensetzung in einem Ofen bei 150 °C für 1 Stunde.

**2.** Schutzfilm nach Anspruch 1, wobei die erste Polyorganosiloxankomponente in einer Menge von 70 Gew.-% oder mehr, bezogen auf das Gesamtgewicht der Polyorganosiloxankomponente, enthalten ist.

**3.** Schutzfilm nach Anspruch 1, wobei die erste Polyorganosiloxankomponente ein gewichtsmittleres Molekulargewicht (Mw) in einem Bereich von 100.000 bis 1.000.000 g/mol aufweist, wobei das gewichtsmittlere Molekulargewicht ($M_w$) unter Verwendung von GPC (Gelpermeationschromatographie), wie in der Beschreibung offenbart, gemessen wird.

**4.** Schutzfilm nach Anspruch 1, wobei die zweite Polyorganosiloxankomponente ein gewichtsmittleres Molekulargewicht (Mw) in einem Bereich von 1.000 bis 50.000 g/mol aufweist, wobei das gewichtsmittlere Molekulargewicht ($M_w$) unter Verwendung von GPC (Gelpermeationschromatographie), wie in der Beschreibung offenbart, gemessen wird.

**5.** Schutzfilm nach Anspruch 1, wobei der Redoxkatalysator eines oder mehrere, ausgewählt aus der Gruppe, bestehend aus einem Naphthenatmetallsalz, einem Acetathydratmetallsalz, einem Alkanoatmetallsalz, einem Sulfathydratmetallsalz, einem Acetylacetonatmetallsalz, einem Halogenidmetallsalz und einem Alkoxidmetallsalz, umfasst.

**6.** Schutzfilm nach Anspruch 1, ferner umfassend einen Platinkatalysator.

**7.** Schutzfilm nach Anspruch 1, wobei der Redoxkatalysator in einem Bereich von 0,01 bis 80 Gewichtsteilen, bezogen auf 100 Gewichtsteile der ersten Polyorganosiloxankomponente, enthalten ist.

**8.** Schutzfilm nach Anspruch 1, wobei das gehärtete Produkt der Acrylzusammensetzung ein Restbindungsverhältnis ($A_d$) von 80 % oder mehr gemäß der allgemeinen Gleichung 1 unten aufweist:

[Allgemeine Gleichung 1]

$$\text{Restbindungsverhältnis } (A_d) = A_f/A_i \times 100\ (\%)$$

wobei $A_i$ die Trennschälkraft bei 25 °C des gehärteten Produkts der Acrylzusammensetzung, gemessen an der Grenzfläche des PET-(Polyethylenterephthalat)-Films mit einem Schälwinkel von 180 Grad und einer Schälrate von 0,3 m/min, ist und $A_f$ die Trennschälkraft bei 25 °C des gehärteten Produkts der Acrylzusammensetzung, gemessen mit einem Schälwinkel von 180 Grad und einer Schälrate von 0,3 m/min, nach dem Messen von $A_i$ ist und dann wieder an der Grenzfläche des PET-Films befestigt wird.

**9.** Optisches Element, wobei der Schutzfilm nach Anspruch 1 an einer oder beiden Seiten befestigt ist.

**10.** Flüssigkristallanzeigevorrichtung, wobei das optische Element nach Anspruch 9 an einer oder beiden Seiten einer Flüssigkristalltafel befestigt ist.

**Revendications**

**1.** Film protecteur comprenant un film de support, une couche adhésive sensible à la pression et une couche détachable,

où la couche détachable comprend le produit durci d'une composition durcissable et la couche adhésive sensible à la pression comprend le produit durci d'une composition acrylique,
où la composition durcissable comprend un composant de type polyorganosiloxane et un catalyseur redox utilisé pour le durcissement d'une composition acrylique en l'absence de chaleur ou d'une irradiation par rayonnement énergétique,
où le composant de type polyorganosiloxane comprend un premier composant de type polyorganosiloxane représenté par la Formula 1 ci-dessous et un second composant de type polyorganosiloxane représenté par la Formula 2 ci-dessous,
où le catalyseur redox est inclus dans une plage de 0,01 à 80 parties en poids pour 100 parties en poids du composant de type polyorganosiloxane,
où une teneur en un matériau qui n'a pas réagi ($T_1$), calculée conformément à l'Équation générale 2 ci-dessous, est inférieure ou égale à 60 % et où un produit durci de la composition acrylique présente une force de détachement par pelage inférieure ou égale à 19,3 N/m (50 gf/pouce) à 25 °C, comme mesurée à une interface d'un film de PET à un angle de pelage de 180 degrés et une vitesse de pelage de 0,3 m/min :

[Formule 1]

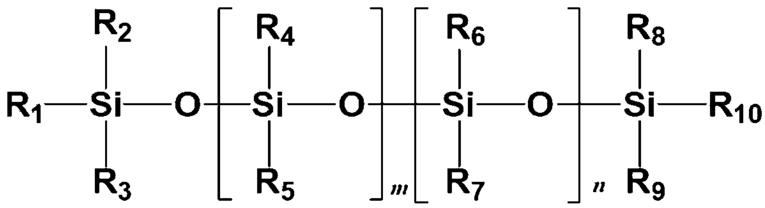

où
$R_1$, $R_7$ et $R_{10}$ représentent chacun indépendamment un groupement alkényle à 2 à 20 atomes de carbone, un groupement isocyanate ou un groupement amine,
$R_2$, $R_3$, $R_4$, $R_5$, $R_6$, $R_8$ et $R_9$ représentent chacun indépendamment un groupement alkyle à 1 à 20 atomes de carbone, un groupement alkényle à 2 à 20 atomes de carbone, un groupement isocyanate ou un groupement amine et
m et n représentent chacun indépendamment un nombre dans la plage de 1 à 10 000 ;

[Formule 2]

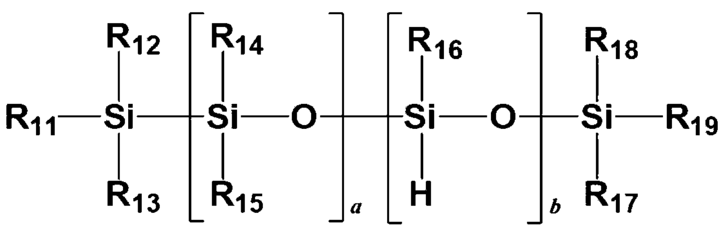

où
$R_{11}$ à $R_{19}$ représentent chacun indépendamment un groupement alkyle à 1 à 20 atomes de carbone et
a et b représentent chacun indépendamment un nombre dans la plage de 1 à 10 000 ;

[Équation générale 2]

$$T_1 = 100 \times (W_A - W_B)/W_A$$

où $W_A$ est le poids initial du produit durci obtenu par durcissement de la composition acrylique à 25 °C pendant 12 heures ou 20 heures et $W_B$ est le poids ultérieur du produit durci de la composition acrylique, le poids initial ayant été mesuré après stockage du produit durci de la composition acrylique dans une étuve à 150 °C pendant 1 heure.

**2.** Film protecteur selon la revendication 1, où le premier composant de type polyorganosiloxane est inclus à une quantité, rapportée au poids total du composant de type polyorganosiloxane, égale ou supérieure à 70 % en poids.

**3.** Film protecteur selon la revendication 1, où le premier composant de type polyorganosiloxane a une masse moléculaire moyenne en poids (Mw) dans une plage de 100 000 à 1 000 000 g/mol, la masse moléculaire moyenne en poids (Mw) étant mesurée par GPC (chromatographie par perméation de gel) comme divulgué dans la spécification.

**4.** Film protecteur selon la revendication 1, où le second composant de type polyorganosiloxane a une masse moléculaire moyenne en poids (Mw) dans une plage de 1 000 à 50 000 g/mol, la masse moléculaire moyenne en poids (Mw) étant mesurée par GPC (chromatographie par perméation de gel) comme divulgué dans la spécification.

**5.** Film protecteur selon la revendication 1, où le catalyseur redox comprend un ou plus sélectionnés dans le groupe consistant en les suivants : sel métallique d'un naphténate, sel métallique d'un acétate hydraté, sel métallique d'un sulfate hydraté, sel métallique d'un acétylacétonate, sel métallique d'un halogénure et sel métallique d'un alkoxyde.

**6.** Film protecteur selon la revendication 1 comprenant en outre un catalyseur au platine.

**7.** Film protecteur selon la revendication 1, où le catalyseur redox est inclus dans une plage de 0,01 à 80 parties en poids pour 100 parties en poids du premier composant de type polyorganosiloxane,

**8.** Film protecteur selon la revendication 1 où, conformément à l'Équation générale 1 ci-dessous, le produit durci de la composition acrylique a un taux d'adhérence résiduelle ($A_d$) égal ou supérieur à 80 % :

[Équation générale 1]

$$\text{Taux d'adhérence résiduelle } (A_d) = A_f/A_i \times 100\ (\%)$$

où $A_i$ est la force de détachement par pelage du produit durci de la composition acrylique à 25 °C, comme mesurée à l'interface du film de PET (polytéréphtalate d'éthylène) à un angle de pelage de 180 degrés et une vitesse de pelage de 0,3 m/min, et $A_f$ est la force de détachement par pelage du produit durci de la composition acrylique à 25 °C, comme mesurée à un angle de pelage de 180 degrés et une vitesse de pelage de 0,3 m/min après mesure de $A_i$ puis ré-attachement à l'interface du film de PET.

**9.** Élément optique auquel le film protecteur selon la revendication 1 est attaché sur une ou les deux faces.

**10.** Dispositif d'affichage à cristaux liquides, où l'élément optique selon la revendication 9 est attaché sur une ou les deux faces d'un panneau à cristaux liquides.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020160143501
- KR 1020160105354
- US 5204384 A
- US 2010267885 A1
- US 5194489 A
- US 4293676 A
- EP 2046866 B1
- US 2015252236 A1
- US 2014356620 A1
- KR 20070101001
- KR 20110095464
- KR 20110095004
- KR 20110095820
- KR 20000019116
- KR 20000009647
- KR 20000018983
- KR 20030068335
- KR 20020066505
- KR 20020008267
- KR 20010111362
- KR 20040083916
- KR 20040085484
- KR 20080005722
- KR 20080063107
- KR 20080101801
- KR 20090049557


### Non-patent literature cited in the description


- *CHEMICAL ABSTRACTS*, 81032-58-8